# EUROPEAN PATENT APPLICATION

(11) **EP 4 678 929 A1**
(43) Date of publication of application: **14.01.2026**
(21) Application number: 24766894.0
(22) Date of filing: 21.02.2024
(51) Int. Cl.: F16C 19/18, B60B 35/18, F16C 33/78, F16J 15/3232

(54) **HUB BEARING**

(30) Priority: 08.03.2023 JP 2023035690
(71) Applicant: Minebea Mitsumi Inc., Kitasaku-gun, Nagano 3890293 (JP)
(72) Inventor: IGUCHI, Yoji, Kitasaku-gun, Nagano 389-0293 (JP); TAKIMOTO, Tatsuya, Kitasaku-gun, Nagano 389-0293 (JP); FUJIURA, Hideo, Kitasaku-gun, Nagano 389-0293 (JP)
(74) Representative: Winter, Brandl - Partnerschaft mbB
(86) International application number: PCT/JP2024/006376
(87) International publication number: WO 2024/185523

(57) **Abstract**

A hub bearing that can ensure rigidity and improve reliability is provided. The hub bearing includes an inner member including an inner ring main body, which has a cylindrical shape and an outer periphery on which a double row of inner rolling surfaces is formed; an outer member including an inner cylinder mounted to a rotating shaft and disposed inside the inner ring main body, a disk portion projecting radially outward from the inner cylinder and to which a wheel is attached, and an outer cylinder having a cylindrical shape, connected to the disk portion, and provided with a double row of outer rolling surfaces facing the double row of inner rolling surfaces in a radial direction, and a double train of rolling elements rotatably accommodated between the double row of inner rolling surfaces and the double row of outer rolling surfaces; and a seal for sealing a gap between the inner member and the outer member. The seal is provided at a position where the seal does not overlap the double train of rolling elements in the radial direction.

## Description

### TECHNICAL FIELD

This disclosure relates to a hub bearing.

### BACKGROUND ART

There is a hub bearing for rotatably supporting a wheel of, for example, an automobile (see, for example, Patent Document 1). The hub bearing described in Patent Document 1 is provided with an outer ring member for retaining an outer ring and an inner ring member for retaining an inner ring. The outer ring and the outer ring member rotate relative to the inner ring and the inner ring member. The outer ring member includes a cylindrical drive shaft attaching portion attached to a drive shaft, a disk portion fixed to a wheel, and an outer cylinder portion formed on the outer periphery of the disk portion to retain the outer ring. The inner ring member includes a cylinder portion disposed outward from the drive shaft mounting portion in the radial direction, a disk portion connected to the cylinder portion and projecting radially outward, and an outer cylinder portion formed on the outer periphery of the disk portion and to which the inner ring is mounted. The hub bearing has a double row of balls between the inner ring and the outer ring. The gap between the inner ring and the outer ring is filled with grease.

### RELATED ART DOCUMENTS

### PATENT DOCUMENT

[Patent Document 1] Japanese Patent No. 588665

### SUMMARY OF THE INVENTION

### PROBLEMS TO BE SOLVED BY THE INVENTION

In a conventional hub bearing, seals are provided at respective sides of the double row of balls in the axial direction and at the same position as the double row of balls in the radial direction. In such a conventional hub bearing, in the case where a design space in the axial direction becomes too narrow, it is necessary to reduce the outer diameter of the balls. In the case where the outer diameter of the balls is small, the rigidity of the hub bearing is decreased. In the case where the gap between the inner ring and the outer ring is narrow, the amount of grease filling the gap is reduced, which may decrease the reliability of the device.

It is an object of this disclosure to provide a hub bearing capable of ensuring rigidity and improving reliability.

### SOLUTION TO THE PROBLEM

A hub bearing according to one aspect of the present disclosure includes an inner member including an inner ring main body, which has a cylindrical shape and an outer periphery on which a double row of inner rolling surfaces is formed; an outer member including an inner cylinder mounted to a rotating shaft and disposed inside the inner ring main body, a disk portion projecting radially outward from the inner cylinder and to which a wheel is attached, and an outer cylinder having a cylindrical shape, connected to the disk portion, and provided with a double row of outer rolling surfaces facing the double row of inner rolling surfaces in a radial direction; a double train of rolling elements rotatably accommodated between the double row of inner rolling surfaces and the double row of outer rolling surfaces; and a seal for sealing a gap between the inner member and the outer member. The inner member includes an inner ring disk portion extending radially outward from the outer periphery of the inner ring main body, and an inner ring outer cylinder having a cylindrical shape, connected to the inner ring disk portion, and facing the outer cylinder in the radial direction. The seal includes a first seal for sealing a gap between the inner ring outer cylinder of the inner member and the outer cylinder of the outer member. The first seal is provided at a position where the first seal does not overlap the double train of rolling elements in the radial direction.

### EFFECTS OF THE INVENTION

According to the present disclosure, a hub bearing capable of ensuring rigidity and improving reliability can be provided.

### BRIEF DESCRIPTION OF THE DRAWINGS

[FIG. 1] FIG. 1 is a cross-sectional view of a hub bearing according to a first embodiment along an axial direction of the hub bearing.
[FIG. 2] FIG. 2 is an enlarged cross-sectional view illustrating an essential part of the hub bearing according to the first embodiment, particularly a first seal provided in a gap between an inner member and an outer member.
[FIG. 3] FIG. 3 is a cross-sectional view of a hub bearing according to a second embodiment along an axial direction of the hub bearing.
[FIG. 4] FIG. 4 is an enlarged cross-sectional view illustrating an essential part of the hub bearing according to the second embodiment, particularly a first seal provided in a gap between an inner member and an outer member.
[FIG. 5] FIG. 5 is an enlarged cross-sectional view illustrating an essential part of the hub bearing according to a third embodiment, particularly a first seal provided in a gap between an inner member and an outer member.
[FIG. 6] FIG. 6 is an enlarged cross-sectional view illustrating an essential part of the hub bearing according to a fourth embodiment, particularly a first seal provided in a gap between an inner member and an outer member.
[FIG. 7] FIG. 7 is an enlarged cross-sectional view illustrating an essential part of the hub bearing according to a fifth embodiment, particularly a first seal provided in a gap between an inner member and an outer member.
[FIG. 8] FIG. 8 is an enlarged cross-sectional view illustrating an essential part of the hub bearing according to a sixth embodiment, particularly a first seal provided in a gap between an inner member and an outer member.
[FIG. 9] FIG. 9 is an enlarged cross-sectional view illustrating an essential part of the hub bearing according to a seventh embodiment, particularly a first seal provided in a gap between an inner member and an outer member.
[FIG. 10] FIG. 10 is an enlarged cross-sectional view illustrating an essential part of the hub bearing according to an eighth embodiment, particularly a first seal provided in a gap between an inner member and an outer member.
[FIG. 11] FIG. 11 is an enlarged cross-sectional view illustrating an essential part of the hub bearing according to a ninth embodiment, particularly a first seal provided in a gap between an inner member and an outer member.
[FIG. 12] FIG. 12 is a perspective view illustrating a part of a hub bearing according to a tenth embodiment.
[FIG. 13] FIG. 13 is a perspective view illustrating an outer member of a hub bearing according to the tenth embodiment.
[FIG. 14] FIG. 14 is a perspective view illustrating an outer member of a hub bearing according to an eleventh embodiment.
[FIG. 15] FIG. 15 is a perspective view illustrating an outer member of a hub bearing according to a twelfth embodiment.
[FIG. 16] FIG. 16 is a perspective view illustrating an outer member of a hub bearing according to a thirteenth embodiment.
[FIG. 17] FIG. 17 is a perspective view illustrating an outer member of a hub bearing according to a fourteenth embodiment.
[FIG. 18] FIG. 18 is a perspective view illustrating an outer member of a hub bearing according to a fifteenth embodiment.
[FIG. 19] FIG. 19 is a perspective view illustrating an outer member of a hub bearing according to a sixteenth embodiment.
[FIG. 20] FIG. 20 is a perspective view illustrating an outer member of a hub bearing according to a seventeenth embodiment.
[FIG. 21] FIG. 21 is a perspective view illustrating an outer member of a hub bearing according to an eighteenth embodiment.
[FIG. 22] FIG. 22 is a perspective view illustrating an outer member of a hub bearing according to a nineteenth embodiment.
[FIG. 23] FIG. 23 is a perspective view illustrating an outer member of a hub bearing according to a twentieth embodiment.
[FIG. 24] FIG. 24 is a perspective view illustrating an outer member of a hub bearing according to a twenty-first embodiment.
[FIG. 25] FIG. 25 is a perspective view illustrating an outer member of a hub bearing according to a twenty-second embodiment.
[FIG. 26] FIG. 26 is a perspective view illustrating an outer member of a hub bearing according to a twenty-third embodiment.

### DESCRIPTION OF EMBODIMENTS

Non-limiting embodiments of the present invention will now be described with reference to the accompanying drawings. In the accompanying drawings, the same or corresponding members or parts are denoted by the same or corresponding reference numerals. In the following description, duplicate descriptions of the same or corresponding members or parts are omitted. In the drawings, the members or parts are not necessarily drawn to scale. A person skilled in the art can determine at their discretion the specific dimensions by referring to the following non-limiting examples. The following examples are illustrative rather than limiting the invention. The features and combinations described in the examples are not necessarily essential to the invention.

### <Hub Bearing according to First Embodiment>

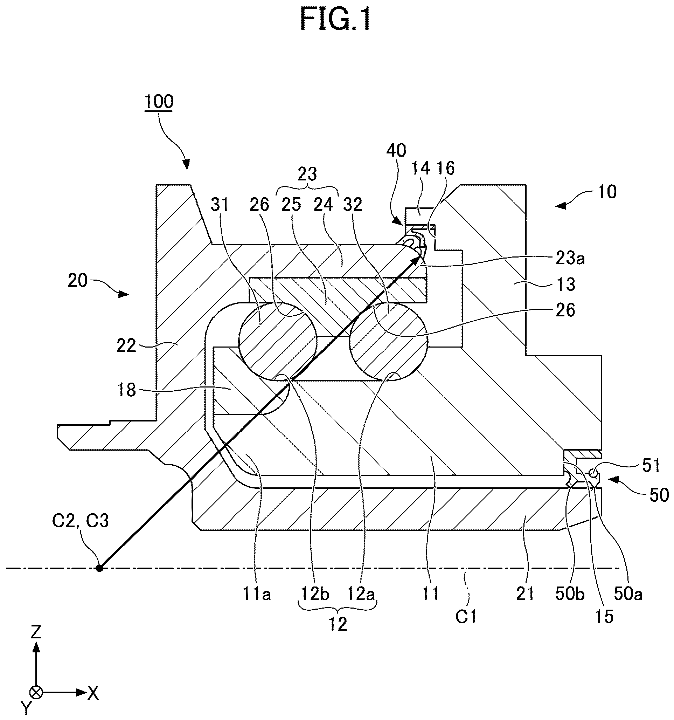

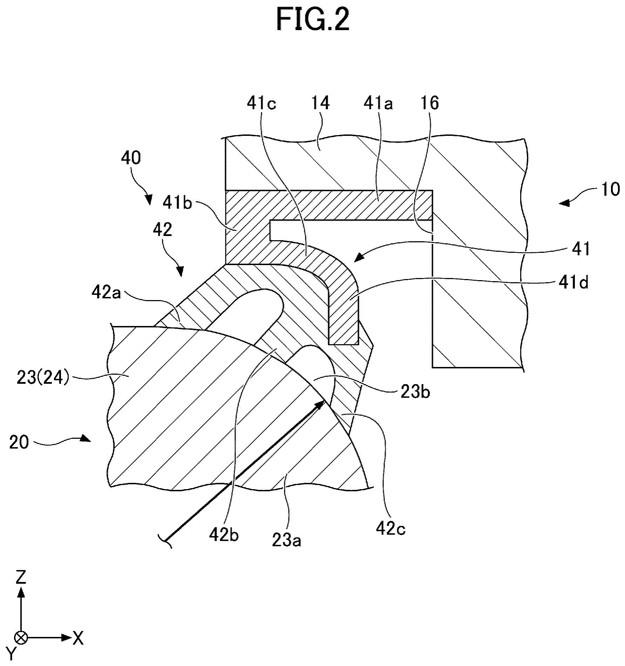

FIG. 1 is a cross-sectional view of a hub bearing according to the first embodiment along an axial direction of the hub bearing. FIG. 2 is an enlarged cross-sectional view illustrating an essential part of the hub bearing according to the first embodiment, particularly a first seal provided in a gap between an inner member and an outer member. In some drawings, arrows indicating three directions orthogonal to each other are illustrated. The three directions orthogonal to each other are the X-axis direction, the Y-axis direction, and the Z-axis direction, for example. The X-axis direction is along an axial direction (vehicle width direction) of a rotating shaft. The Y-axis direction and the Z-axis direction are along a radial direction of a rotating shaft. The Y-axis direction is along a longitudinal direction of a vehicle. The Z-axis direction is along the vertical direction.

The hub bearing 100 illustrated in FIG. 1 is supported, for example, by a vehicle body to rotatably support a wheel. The hub bearing 100 is attached to the vehicle body via a suspension arm, for example. The wheel has a tire and a rim.

The hub bearing 100 includes an inner member 10, an outer member 20, rolling elements 31 and 32, a first seal 40, and a second seal 50.

### <Inner Member>

The inner member 10 includes an inner ring main body 11, an inner ring disk portion 13, and an inner ring outer cylinder 14. The inner ring main body 11 has a cylindrical shape. The axial direction of the inner ring main body 11 is along the X-axis direction. The inner ring main body 11 has a predetermined length along the axial direction. A part of the outer member 20 is inserted into the inner ring main body 11. An inner rolling surface 12 is formed on the outer peripheral surface of the inner ring main body 11. The inner rolling surface 12 has inner rolling surfaces 12a and 12b. The inner rolling surface 12a is formed on the outer peripheral surface of the inner ring main body 11. The inner rolling surface 12b is formed in a retainer ring 18, which is described later. The inner rolling surface 12a is in contact with the rolling elements 32, and the inner rolling surface 12b is in contact with the rolling elements 31.

The inner ring disk portion 13 projects radially outward from the inner ring main body 11. The inner ring disk portion 13 has a circular shape when viewed along the X-axis direction. The inner ring disk portion 13 is disposed closer to the center of the vehicle body than the inner rolling surface 12 in the X-axis direction, that is, farther inward in the vehicle width direction. In other words, the inner rolling surface 12 is disposed closer to the wheel than the inner ring disk portion 13 in the X-axis direction, that is, farther outward in the vehicle width direction.

The inner ring outer cylinder 14 is provided on the outer periphery of the inner ring disk portion 13 and projects outward in the vehicle width direction. The inner ring outer cylinder 14 has a circular shape when viewed along the X-axis direction.

A step 15 is formed on the inner periphery of the proximal portion of the inner ring main body 11. A portion closer to the center of the vehicle in the X-axis direction will be referred as the "proximal portion" of the inner ring main body 11, and a portion closer to the wheel in the X-axis direction will be referred to as the "distal portion 11a" of the inner ring main body 11. The step 15 is disposed farther inward than the inner ring disk portion 13 in the vehicle width direction. The step 15 is formed to be recessed outward in the vehicle width direction. The step 15 is formed along the entire periphery in the circumferential direction. The second seal 50 is mounted at the step 15. The step 15 forms a ring groove to which the second seal 50 is mounted.

A step 16 is formed on the inner periphery of the inner ring outer cylinder 14. The step 16 is disposed farther outward than the inner ring disk portion 13 in the vehicle width direction. The step 16 is formed to be recessed inward in the vehicle width direction. The step 16 is formed along the entire periphery in the circumferential direction. The first seal 40 is mounted at the step 16. The step 16 forms a ring groove to which the first seal 40 is mounted.

### <Outer Member>

The outer member 20 has an inner cylinder 21, a disk portion 22, and an outer cylinder 23. The inner cylinder 21 has a cylindrical shape. The axial direction of the inner cylinder 21 is along the X-axis direction. The inner cylinder 21 has a predetermined length along the axial direction. The inner cylinder 21 is longer than the inner ring main body 11 in the X-axis direction. The inner cylinder 21 extends farther outward than the inner ring main body 11 in the vehicle width direction.

A drive shaft serving as a rotating shaft is inserted into the inner cylinder 21. The inner ring main body 11 is disposed farther outward than the inner cylinder 21 in the radial direction. A gap is formed between the outer peripheral surface of the inner cylinder 21 and the inner peripheral surface of the inner ring main body 11 with respect to the radial direction.

The disk portion 22 projects radially outward from the inner cylinder 21. The disk portion 22 has a circular shape when viewed along the X-axis direction. The disk portion 22 is disposed farther outward than the inner member 10 in the vehicle width direction. In other words, the inner member 10 is disposed farther inward than the disk portion 22 in the vehicle width direction.

The outer cylinder 23 is provided on the outer periphery of the disk portion 22 and projects inward in the vehicle width direction. The outer cylinder 23 has a circular shape when viewed along the X-axis direction. The outer cylinder 23 projects from the disk portion 22 toward the inner ring disk portion 13 in the X-axis direction. As illustrated in FIG. 2, a tip portion 23a of the outer cylinder 23 is arranged facing the inner ring disk portion 13 in the X-axis direction. The tip portion 23a is the end portion away from the disk portion 22 in the X-axis direction.

In the radial direction, a predetermined space is formed between the inner cylinder 21 and the outer cylinder 23. A part of the inner ring main body 11, as well as the rolling elements 31 and 32, are disposed in the space between the inner cylinder 21 and the outer cylinder 23. The inner ring outer cylinder 14 is disposed farther outward than the tip portion 23a of the outer cylinder 23 in the radial direction.

As illustrated in FIG. 1, the outer cylinder 23 includes an outer cylinder main body 24 and an outer ring 25. In the outer member 20, the inner cylinder 21, the disk portion 22, and the outer cylinder main body 24 are formed as one member. The outer ring 25 is formed as a separate member from the inner cylinder 21, the disk portion 22, and the outer cylinder main body 24. The outer cylinder main body 24 and the outer ring 25 have a cylindrical shape. The outer ring 25 is mounted on the inner periphery of the outer cylinder main body 24. A step to which the outer ring 25 is mounted is formed on the inner periphery of the outer cylinder main body 24. The inner cylinder 21, the disk portion 22, the outer cylinder main body 24, and the outer ring 25 rotate integrally.

An outer rolling surface 26 is formed on the inner periphery of the outer ring 25. The inner rolling surface 12 and the outer rolling surface 26 face each other in the radial direction.

### <Rolling Elements>

The plurality of rolling elements 31 and the plurality of rolling elements 32 are disposed between the inner rolling surface 12 and the outer rolling surface 26 in the radial direction, and are in contact with the inner rolling surface 12 and the outer rolling surface 26. The plurality of rolling elements 31 and the plurality of rolling elements 32 are steel balls or ceramics. The plurality of rolling elements 31 are disposed side by side in the circumferential direction. Similarly, the plurality of rolling elements 32 are disposed side by side in the circumferential direction. The plurality of rolling elements 31 and the plurality of rolling elements 32 are disposed apart in the X-axis direction. The rolling elements 31 are disposed closer to the disk portion 22 than the rolling elements 32 in the X-axis direction. A train of the plurality of rolling elements 31 is disposed closer to the disk portion 22 than a train of the plurality of rolling elements 32.

### <Retainer Ring>

The hub bearing 100 includes a retainer ring 18. The retainer ring 18 is mounted on the outer periphery of the distal portion 11a of the inner ring main body 11. An inner rolling surface 12b is formed on the outer periphery of the retainer ring 18. In the inner rolling surface 12, the inner rolling surface 12b, which is closer to the disk portion 22 in the X-axis direction, is formed on the outer periphery of the retainer ring 18. The rolling elements 31 are retained between the outer ring 25 and the retainer ring 18. The rolling elements 32 are retained between the outer ring 25 and the inner ring main body 11.

### <First Seal>

The first seal 40 seals the gap between the inner ring outer cylinder 14 of the inner member 10 and the outer cylinder 23 of the outer member 20. The first seal 40 has a ring shape and seals the gap between the inner peripheral surface of the inner ring outer cylinder 14 and the outer peripheral surface of the outer cylinder 23 over the entire periphery. The first seal 40 includes a first seal retainer ring 41 and a lip 42. The first seal retainer ring 41 is, for example, a metal ring for retaining the lip 42. The first seal retainer ring 41 has a first piece 41a, a second piece 41b, a third piece 41c, and a fourth piece 41d.

The thickness direction of the first piece 41a is along the radial direction. The second piece 41b is folded back from the first piece 41a and projects radially inward. The thickness direction of the second piece 41b is along the X-axis direction. The third piece 41c is folded back from the second piece 41b and projects in the X-axis direction. The third piece 41c is disposed farther inward than the first piece 41a in the radial direction. The fourth piece 41d is folded back from the third piece 41c and projects radially inward. The thickness direction of the fourth piece 41d is along the X-axis direction. The fourth piece 41d projects toward the tip portion 23a of the outer cylinder 23.

The lip 42 may be, for example, an elastic material, soft resin, rubber, or the like. The lip 42 may be a vulcanized rubber material. The lip 42 is retained by the first seal retainer ring 41. The lip 42 has a plurality of lip portions 42a through 42c. The plurality of lip portions 42a through 42c are in contact with the outer peripheral surface of the tip portion 23a of the outer cylinder 23 at respective positions.

The lip portion 42a protrudes toward the outer cylinder 23 from a connecting portion between the second piece 41b and the third piece 41c, for example. The lip portion 42b protrudes toward the outer cylinder 23 from a connecting portion between the third piece 41c and the fourth piece 41d, for example. The lip portion 42c protrudes toward the outer cylinder 23 from a tip portion of the fourth piece 41d, for example.

### <Contact Surface between First Seal and Outer Cylinder>

The outer cylinder 23 has a contact surface 23b that contacts the plurality of lip portions 42a through 42c. The contact surface 23b includes an outer peripheral surface of the tip portion 23a of the outer cylinder 23. The contact surface 23b includes a curved surface that is convex with respect to the plurality of lip portions 42a through 42c. The curved surface that is convex with respect to the plurality of lip portions 42a through 42c means that the center of curvature C3 of the curved surface is closer to the center of rotation C2 than the curved surface in the cross section along the X-axis direction, as illustrated in FIG. 1. The center of rotation C2 coincides with the center of rotation C1 (axis) of the rotating shaft.

In the cross section along the X-axis direction, the center of curvature C3 of the contact surface 23b, which is a curved surface, coincides with the center of rotation C2 of the wheel. The center of rotation C2 of the wheel coincides with the center of rotation C1 of the rotating shaft. Herein, the "center of rotation of the wheel" is the center of rotation around the axis along the Y-axis direction. For example, in the case where the vehicle is viewed along the longitudinal direction (Y-axis direction) during traveling, the wheel may be displaced so as to rotate around the Y-axis. In the case where the center of curvature C3 of the contact surface 23b, which is a curved surface, coincides with the center of rotation C2, even if the wheel is displaced and the outer member 20 is displaced, contact pressure between the plurality of lip portions 42a through 42c and the contact surface 23b can be maintained uniformly. For example, in the case where the contact surface is formed linearly and the outer member 20 is displaced around the center of rotation extending in the Y-axis direction, the contact pressure between the contact surface and each of the plurality of lip portions will vary.

### <Second Seal>

The second seal 50 seals the gap between the inner ring main body 11 of the inner member 10 and the inner cylinder 21 of the outer member 20. The second seal 50 has a ring shape and seals the gap between the inner peripheral surface of the inner ring main body 11 and the outer peripheral surface of the inner cylinder 21 over the entire periphery.

The second seal 50 has a plurality of lip portions 50a and 50b. The plurality of lip portions 50a and 50b protrude radially inward and contact the outer peripheral surface of the inner cylinder 21. The plurality of lip portions 50a and 50b contact the outer peripheral surface of the inner cylinder 21 at different positions in the X-axis direction.

The second seal 50 is pressed radially inward by the second retainer ring 51. The second seal 50 may be, for example, an elastic material, soft resin, rubber, or the like. The second seal 50 may be a vulcanized rubber material.

### <Positional Relationship between First Seal and Second Seal>

The first seal 40 and the second seal 50 are disposed at different positions in the radial direction of the rotating shaft. The radial direction of the rotating shaft is a direction orthogonal to the X-axis direction and along the YZ plane. When viewed along the X-axis direction, the first seal 40 and the second seal 50 are disposed at positions where the first seal 40 and the second seal 50 do not overlap each other.

The second seal 50 is disposed farther inward than the first seal 40 in the radial direction. The second seal 50 is disposed farther inward than the rolling elements 31 and 32 in the radial direction. The first seal 40 is disposed farther outward than the rolling elements 31 and 32 in the radial direction. When viewed along the X-axis direction, the first seal 40 and the second seal 50 are disposed at positions where the first seal 40 and the second seal 50 do not overlap the rolling elements 31 and 32. The first seal 40 is disposed at a position where the first seal 40 overlaps the rolling elements 32 in the X-axis direction.

The second seal 50 is disposed farther inward than the first seal 40 in the vehicle width direction when viewed along the X-axis direction. The first seal 40 and the second seal 50 are disposed farther inward than the rolling elements 31 in the vehicle width direction.

### <Grease>

In the hub bearing 100, the gap between the inner member 10 and the outer member 20 is filled with grease. The gap in the radial direction between the inner rolling surface 12 and the outer rolling surface 26 is filled with grease. In the gap between the inner member 10 and the outer member 20, the part that is in contact with the rolling elements 31 and 32, the inner rolling surface 12, and the outer rolling surface 26 is filled with grease.

### (Advantageous Effects of Hub Bearing according to First Embodiment)

The hub bearing 100 according to the first embodiment includes the inner member 10 including the cylindrical inner ring main body 11 having the outer periphery on which a double row of inner rolling surfaces 12 is formed; the outer member 20 including the inner cylinder 21 mounted to the rotating shaft and disposed inside the inner ring main body 11, the disk portion 22 projecting radially outward from the inner cylinder 21 and to which a wheel is attached, and the cylindrical outer cylinder 23 connected to the disk portion 22 and provided with a double row of outer rolling surfaces 26 facing the double row of inner rolling surfaces 12 in the radial direction; a double train of rolling elements 31 and 32 rotatably accommodated between the double row of inner rolling surfaces 12 and the double row of outer rolling surfaces 26; and the first seal 40 and the second seal 50, both of which seal the gap between the inner member 10 and the outer member 20. The first seal 40 and the second seal 50 are provided at positions where the first seal 40 and the second seal 50 do not overlap the double train of rolling elements 31 and 32 in the radial direction.

According to such a hub bearing 100, it is not necessary to dispose the rolling elements 31 and 32 between the first seal 40 and the second seal 50 in the X-axis direction, and the degree of freedom of design is improved. Since the rolling elements 31 and 32 can be disposed without being affected by the positional relationship between the first seal 40 and the second seal 50, it is not necessary to make the rolling elements 31 and 32 small. In the hub bearing 100, the degree of freedom of design between the rolling elements 31 and 32 is high in the X-axis direction, and it is not necessary to narrow the gap between the rolling elements 31 and 32, and it is not necessary to make the diameters of the rolling elements 31 and 32 small. Therefore, the rigidity of the hub bearing 100 can be ensured. In the hub bearing 100, since the degree of freedom of design is high, the gap between the inner member 10 and the outer member 20 can be reserved, and a space that can be filled with grease can be thereby reserved.

The hub bearing 100 can improve the degree of freedom of design, increase the diameters of the rolling elements 31 and 32, and increase magnitudes of load that can be carried by the hub bearing 100. The hub bearing 100 can increase the diameters of the rolling elements 31 and 32, decrease the surface pressure acting on the rolling elements 31 and 32, the inner rolling surface 12, and the outer rolling surface 26, and improve the durability performance of the hub bearing 100. In the hub bearing 100, the reliability of the hub bearing 100 can be improved by increasing the gap between the inner member 10 and the outer member 20 to increase the amount of grease filled in the gap.

In the hub bearing 100, the inner member 10 includes the inner ring disk portion 13 projecting radially outward from the outer periphery of the inner ring main body 11, and the cylindrical inner ring outer cylinder 14 connected to the inner ring disk portion 13 and facing the outer cylinder 23 in the radial direction. The seal includes the first seal 40 for sealing the gap between the inner ring outer cylinder 14 of the inner member 10 and the outer cylinder 23 of the outer member 20, and the second seal 50 for sealing the gap between the inner ring main body 11 of the inner member 10 and the inner cylinder 21 of the outer member 20. The first seal 40 and the second seal 50 are provided at positions where the first seal 40 and the second seal 50 do not overlap the double train of rolling elements 31 and 32 in the radial direction.

According to the hub bearing 100 having this configuration, the gap between the inner ring outer cylinder 14 and the outer cylinder 23 can be sealed by the first seal 40, and entry of foreign matter into the gap between the inner ring outer cylinder 14 and the outer cylinder 23 can be suppressed. According to the hub bearing 100, the gap between the inner ring main body 11 and the inner cylinder 21 can be sealed by the second seal 50, and entry of foreign matter into the gap between the inner ring main body 11 and the inner cylinder 21 can be suppressed. In the hub bearing 100, entry of foreign matter into the gap between the inner member 10 and the outer member 20 can be suppressed by sealing by the first seal 40 and the second seal 50, and reliability of the hub bearing 100 can be improved.

In the hub bearing 100, the first seal 40 has the plurality of lip portions 42a through 42c that contact the outer cylinder 23 of the outer member 20 at respective positions. The outer cylinder 23 of the outer member 20 has the contact surface 23b that contacts the plurality of lip portions 42a through 42c. The contact surface 23b includes a curved surface that is convex with respect to the plurality of lip portions 42a through 42c.

According to the hub bearing 100 having this configuration, the gap between the inner ring outer cylinder 14 and the outer cylinder 23 can be sealed by the plurality of lip portions 42a through 42c contacting the contact surface 23b. Since the contact surface 23b includes a curved surface that is convex with respect to the plurality of lip portions 42a through 42c, a reduction of contact pressure between the plurality of lip portions 42a through 42c and the contact surface 23b can be suppressed and the sealing property can be ensured.

In the hub bearing 100, the center of curvature C3 of the curved surface of the contact surface 23b coincides with the center of rotation of the wheel in the cross section along the rotating shaft. The center of rotation of the wheel coincides with the center of rotation C1 of the rotating shaft.

According to the hub bearing 100 having this configuration, since the center of curvature C3 of the curved surface of the contact surface 23b coincides with the center of rotation C2 of the wheel, even if the wheel is displaced around the center of rotation C2, the contact pressure of the plurality of lip portions 42a through 42c with respect to the contact surface 23b can be maintained uniformly. Therefore, an increase in the contact pressure of any one of the plurality of lip portions 42a through 42c is avoided. Locally concentrated load on the plurality of lip portions 42a through 42c is suppressed. As a result, reliability of the first seal 40 having the plurality of lip portions 42a through 42c can be improved.

### <Hub Bearing according to Second Embodiment>

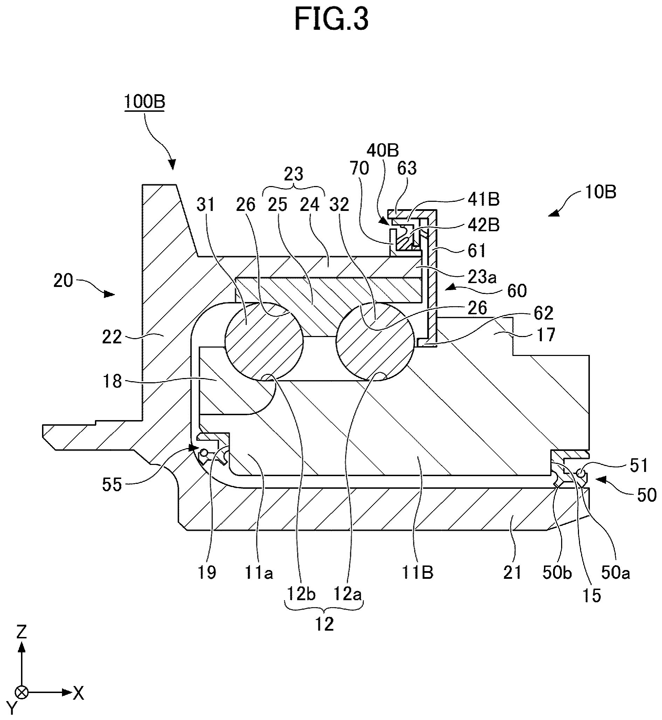

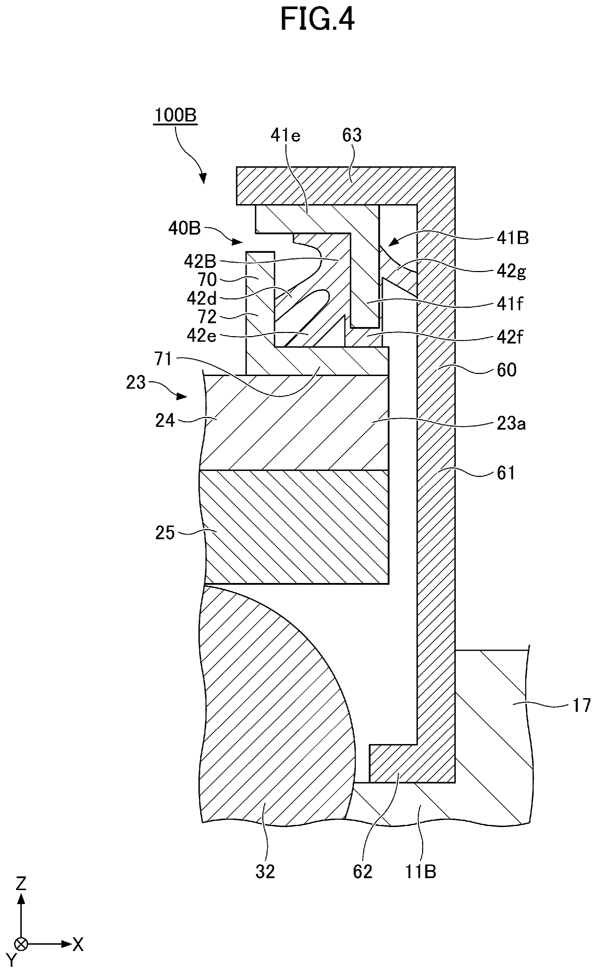

Next, a hub bearing 100B according to the second embodiment will be described with reference to FIGS. 3 and 4. FIG. 3 is a cross-sectional view of the hub bearing according to the second embodiment along an axial direction of the hub bearing. FIG. 4 is an enlarged cross-sectional view illustrating an essential part of the hub bearing according to the second embodiment, particularly a first seal provided in a gap between an inner member and an outer member. The hub bearing 100B illustrated in FIGS. 3 and 4 differs from the hub bearing 100 according to the first embodiment mainly in that the former includes an inner member 10B having a shape differing from the inner member 10, a ring 60 formed separately from an inner ring main body 11B in place of the inner ring disk portion 13, and a first seal 40B in place of the first seal 40, and further includes a third seal 55. In the description of the second embodiment, the same description as that of the first embodiment is omitted.

The hub bearing 100B includes the inner member 10B, the ring 60 formed separately from the inner ring main body 11B, the first seal 40B, and the third seal 55. The outer member 20 of the hub bearing 100B includes an outer ring 70.

### <Inner Member>

The inner member 10B includes the inner ring main body 11B and the ring 60 formed separately from the inner ring main body 11B. The separately formed ring 60 includes an inner ring disk portion and an inner ring outer cylinder. An inner rolling surface 12 is formed on the outer peripheral surface of the inner ring main body 11B. A projecting portion 17 projecting radially outward from the outer peripheral surface is formed in the inner ring main body 11B. The projecting portion 17 is formed along the entire periphery in the circumferential direction of the inner ring main body 11B. The projecting portion 17 is disposed farther inward than the rolling elements 32 in the vehicle width direction when viewed along the X-axis direction. The projecting portion 17 is disposed between the rolling elements 32 and the step 15 in the X-axis direction.

The ring 60 is provided so as to project radially outward from the inner ring main body 11B. The ring 60 is made of metal, for example, and is formed of a material different from that of the inner ring main body 11B. The ring 60 has a first piece 61, a second piece 62, and a third piece 63. The thickness direction of the first piece 61 is along the X-axis direction. The second piece 62 and the third piece 63 are bent from the first piece 61 and protrude in the X-axis direction. The thickness direction of the second piece 62 and the third piece 63 is along the radial direction of the rotating shaft.

The second piece 62 is fixed to the outer periphery of the inner ring main body 11B. The first piece 61 and the second piece 62 are disposed between the projecting portion 17 and the rolling elements 32 in the X-axis direction. The first piece 61 is disposed to cover the tip portion 23a of the outer cylinder 23 in the X-axis direction. The tip portion 23a of the outer cylinder 23 includes the tip of the outer ring 25 and the tip of the outer cylinder main body 24. A gap is formed between the tip portion 23a of the outer cylinder 23 and the first piece 61 in the X-axis direction.

The third piece 63 is disposed to cover the outer periphery of the tip portion 23a of the outer cylinder 23 in the radial direction. A gap is formed between the outer peripheral surface of the outer cylinder 23 and the third piece 63 in the radial direction.

### <First Seal>

The first seal 40B seals the entire periphery of the gap between the inner peripheral surface of the third piece 63 of the separately formed ring 60 and the outer peripheral surface of the tip portion 23a of the outer cylinder 23. The first seal 40B includes a first seal retainer ring 41B and a lip 42B. The first seal retainer ring 41B is, for example, a metal ring for retaining the lip 42B. The first seal retainer ring 41B has a first piece 41e and a second piece 41f.

The thickness direction of the first piece 41e is along the radial direction. The first piece 41e is fixed to the inner peripheral surface of the third piece 63 of the ring 60. The second piece 41f is folded back from the first piece 41e and projects radially inward. The thickness direction of the second piece 41f is along the X-axis direction. The second piece 41f projects toward the tip portion 23a of the outer cylinder 23.

The lip 42B may be, for example, an elastic material, soft resin, rubber, or the like. The lip 42B may be a vulcanized rubber material. The lip 42B is retained by the first seal retainer ring 41B. The lip 42B has a plurality of lip portions 42d through 42g. The plurality of lip portions 42d through 42f contact the outer peripheral surface of the outer ring 70 at respective positions. The lip portion 42g contacts the first piece 61 of the separately formed ring 60.

The lip portion 42d protrudes toward the outer ring 70 from a connecting portion between the first piece 41e and the second piece 41f, for example. The lip portion 42e protrudes toward the outer ring 70 from the second piece 41f, for example. The lip portion 42f protrudes toward the outer ring 70 from the second piece 41f, for example.

### <Outer Ring>

The outer ring 70 is, for example, a ring made of metal. The cross section of the outer ring 70 in the circumferential direction is, for example, L-shaped. The outer ring 70 is press-fitted into the tip portion 23a of the outer cylinder 23. The outer ring 70 has a first piece 71 and a second piece 72. The thickness direction of the first piece 71 is along the radial direction of the rotating shaft. The first piece 71 is fixed to the tip portion 23a of the outer cylinder 23. The second piece 72 is bent from the first piece 71 and protrudes outward in the radial direction of the rotating shaft. The thickness direction of the second piece 72 is along the X-axis direction.

The first piece 71 of the outer ring 70 faces the first piece 41e of the first seal 40B in the radial direction of the rotating shaft. The second piece 72 of the outer ring 70 faces the second piece 41f of the first seal 40B in the X-axis direction. The outer ring 70 rotates integrally with the outer cylinder 23.

### <Contact between First Seal and Outer Ring>

The lip portion 42d of the first seal 40B contacts the second piece 72 of the outer ring 70. The lip portions 42e and 42f contact the first piece 71.

### <Third Seal Retainer>

As illustrated in FIG. 3, a step 19 is formed on the inner periphery of the distal portion 11a of the inner ring main body 11. The step 19 is formed to be recessed inward in the vehicle width direction. The step 19 is formed along the entire periphery in the circumferential direction. A third seal 55 is mounted at the step 15. The step 15 forms a ring groove to which the third seal 55 is mounted.

### <Third Seal>

The third seal 55 seals the gap between the inner ring main body 11B of the inner member 10B and the inner cylinder 21 of the outer member 20. The third seal 55 has a ring shape and seals the gap between the inner peripheral surface of the inner ring main body 11B and the outer peripheral surface of the inner cylinder 21 over the entire periphery.

The third seal 55 has a lip portion. The lip portion protrudes radially inward and contacts the outer peripheral surface of the inner cylinder 21. In the outer member 20, the lip portion may contact the connecting portion between the inner cylinder 21 and the disk portion 22.

### (Advantageous Effects of Hub Bearing according to Second Embodiment)

The hub bearing 100B according to the second embodiment has the same advantageous effects as the hub bearing 100 according to the foregoing first embodiment.

In the hub bearing 100B, the inner ring disk portion and the inner ring outer cylinder are separate from the inner ring main body 11B, and the inner ring disk portion is attached to the inner ring main body 11B. In the hub bearing 100B, the separately formed ring 60 is attached to the inner ring main body 11B. The separately formed ring 60 is an example of the inner ring disk portion and the inner ring outer cylinder.

Since the hub bearing 100B includes the separately formed ring 60 formed of a material different from that of the inner ring main body 11B, the weight of the inner member 10B can be reduced.

The hub bearing 100B is attached to the outer cylinder 23 and includes an outer ring 70 projecting radially outward from the outer cylinder 23. The first seal 40B includes a plurality of lip portions 42d through 42f contacting the outer ring 70 at respective positions.

According to the hub bearing 100B having this configuration, the gap between the outer cylinder 23 of the outer member 20 and the ring 60 can be securely sealed by contacting the lip portions 42d through 42f at respective positions of the outer ring 70. Thus, it is possible to prevent foreign matter from entering the gap between the inner member 10 and the outer member 20.

In the hub bearing 100B, the outer ring 70 includes a second piece 72 projecting radially outward. In such a hub bearing 100B, the lip portions 42d through 42f can be covered by the second piece 72, thereby protecting the lip portions 42d through 42f. The tip of the second piece 72 in the hub bearing 100B can be arranged close to the first piece 41e of the separately formed ring 60 in the radial direction. Thus, the lip portions 42d through 42f can be prevented from being exposed to the outside, and the reliability of the hub bearing 100B can be improved.

The hub bearing 100B also includes a second seal 50 and a third seal 55 which are disposed apart in the X-axis direction. The third seal 55 is disposed closer to the rolling elements 31 than the second seal 50 in the X-axis direction, and seals the gap between the inner ring main body 11B and the inner cylinder 21.

In the hub bearing 100B having this configuration, the gap surrounded by the rolling elements 31, the disk portion 22, the retainer ring 18, and the distal portion 11a of the inner ring main body 11B can be sealed by the third seal 55. In the hub bearing 100B, the gap can be partitioned by the third seal 55, and the gap in contact with the rolling elements 31 can be filled with grease. Thus, the entry of grease into the gap surrounded by the third seal 55, the outer peripheral surface of the inner cylinder 21, the inner peripheral surface of the inner ring main body 11B, and the second seal 50B can be suppressed. If a large amount of grease is present between the outer peripheral surface of the inner cylinder 21 and the inner peripheral surface of the inner ring main body 11B, torque performance may be lowered. In the hub bearing 100B, it is possible to reduce grease adhering to the outer peripheral surface of the inner cylinder 21, and reduce torque required for rotation of the outer member 20.

### <Hub Bearing according to Third Embodiment>

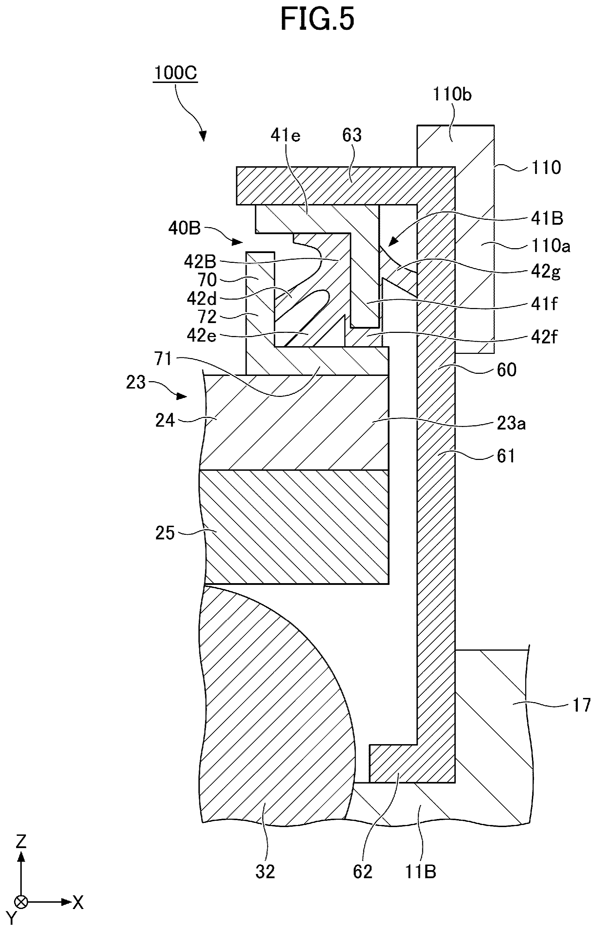

Next, a hub bearing 100C according to the third embodiment will be described with reference to FIG. 5. FIG. 5 is an enlarged cross-sectional view illustrating an essential part of the hub bearing according to the third embodiment, particularly a first seal provided in a gap between an inner member and an outer member. The hub bearing 100C illustrated in FIG. 5 differs from the hub bearing 100B according to the second embodiment in that a separately formed ring 60 is provided with a fin 110 for heat dissipation. In the description of the third embodiment, the same description as that of the first and second embodiments is omitted.

### <Fin for Heat Dissipation>

The fin 110 is, for example, a ring made of metal. The thermal conductivity of the material of the fin 110 is higher than that of the separately formed ring 60. The fin 110 has a first piece 110a and a second piece 110b. The thickness direction of the first piece 110a is along the X-axis direction. The second piece 110b is bent from the first piece 110a and protrudes in the X-axis direction. The thickness direction of the second piece 110b is along the radial direction of the rotating shaft. The fin 110 is attached to the outer periphery of the separately formed ring 60. The first piece 110a of the fin 110 is disposed to overlap the first seal 40B when viewed along the X-axis direction.

### (Advantageous Effects of Hub Bearing according to Third Embodiment)

The hub bearing 100C according to the third embodiment has the same advantageous effects as the hub bearing 100B according to the second embodiment. Since the hub bearing 100C includes the fin 110 for heat dissipation provided in the separately formed ring 60, the ring 60 can be cooled by heat dissipation through the fin 110. In the hub bearing 100C, the temperature rise of the first seal 40B can be suppressed by cooling the ring 60 and the fin 110. In the hub bearing 100C, the temperature rise of the inner ring main body 11B, the grease, the rolling elements 31 and 32, and the outer member 20 can be suppressed by cooling the ring 60 and the fin 110.

### <Hub Bearing according to Fourth Embodiment>

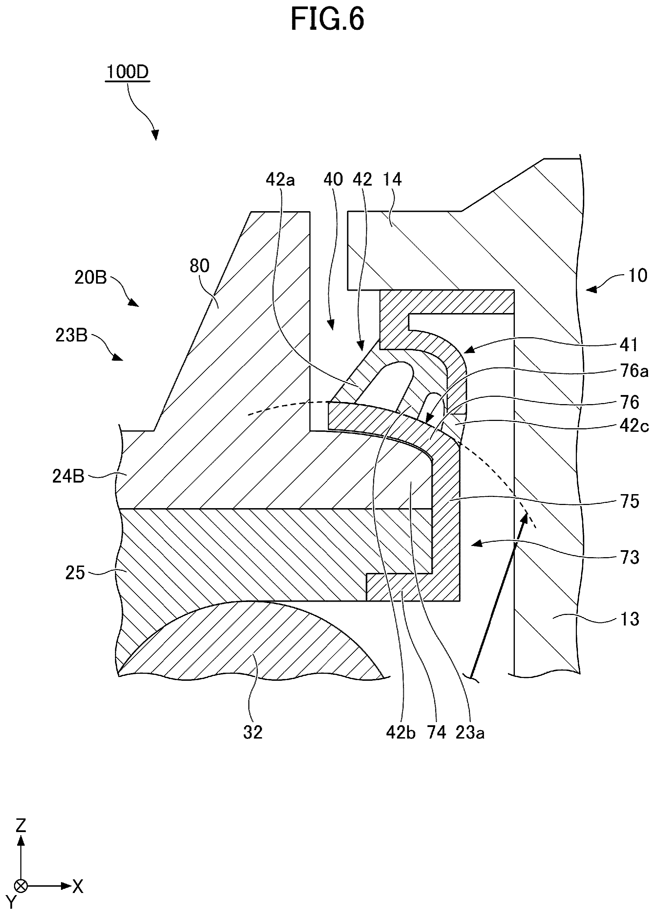

Next, a hub bearing 100D according to the fourth embodiment will be described with reference to FIG. 6. FIG. 6 is an enlarged cross-sectional view illustrating an essential part of the hub bearing according to the fourth embodiment, particularly a first seal provided in a gap between an inner member and an outer member. The hub bearing 100D illustrated in FIG. 6 differs from the hub bearing 100 according to the first embodiment in that the former includes an outer cylinder 23B in which a flange 80 is formed and an outer ring 73 attached to the tip portion 23a of the outer cylinder 23B. In the description of the fourth embodiment, the same description as the first through third embodiments described above will be omitted.

The hub bearing 100D includes an outer member 20B. The outer member 20B has an outer cylinder 23B, and the outer cylinder 23B includes an outer cylinder main body 24B and an outer ring 25. The tip portion 23a of the outer cylinder 23B includes the tip of the outer cylinder main body 24B and the tip of the outer ring 25. An outer ring 73 is attached to the tip portion 23a of the outer cylinder 23B.

### <Outer Ring>

The outer ring 73 has an attaching piece 74, a connecting piece 75, and a contact piece 76. The outer ring 73 is disposed to cover the tip portion 23a of the outer cylinder 23B in the X-axis direction. The thickness direction of the attaching piece 74 is along the radial direction of the rotating shaft. The connecting piece 75 is formed so as to project radially outward from the attaching piece 74. The thickness direction of the connecting piece 75 is along the X-axis direction. The contact piece 76 projects in the X-axis direction from the connecting piece 75.

The connecting piece 75 connects the attaching piece 74 and the contact piece 76. The attaching piece 74 and the contact piece 76 are disposed apart in the radial direction of the rotating shaft. The inner periphery of the tip of the outer ring 25 is provided with a step to which the attaching piece 74 is locked. The contact piece 76 is disposed to cover the outer peripheral surface of the outer cylinder main body 24B. The outer peripheral surface of the contact piece 76 constitutes a contact surface 76a contacting a plurality of lip portions 42a, 42b, and 42c.

The contact surface 76a includes a curved surface that is convex with respect to the plurality of lip portions 42a, 42b, and 42c. In the cross section along the X-axis direction, the center of curvature C3 of the contact surface 23b, which is a curved surface, coincides with the center of rotation of the wheel. The center of rotation of the wheel coincides with the axis of the rotating shaft. Herein, the "center of rotation of the wheel" is the center of rotation around the axis along the Y-axis direction. If the center of curvature C3 of the contact surface 76a, which is a curved surface, coincides with the center of rotation C2, even if the wheel is displaced and the outer member 20 is displaced, a contact pressure between the plurality of lip portions 42a through 42c and the contact surface 23b can be maintained uniformly. For example, if the contact surface is formed linearly, and the outer member 20 is displaced around the center of rotation extending in the Y-axis direction, a contact pressure between the contact surface and each of the plurality of lip portions will vary.

### <Flange>

The outer member 20B has a flange 80 projecting radially outward from the outer periphery of the outer cylinder main body 24B. The flange 80 is formed so as to cover the first seal 40 in the X-axis direction. The flange 80 is disposed on the opposite side of the inner ring disk portion 13 with respect to the first seal 40 in the X-axis direction. The flange 80 is formed along the entire periphery in the circumferential direction. The outer diameter of the flange 80 is, for example, about the same as the outer diameter of the inner ring outer cylinder 14. The flange 80 is disposed at almost the same position as the rolling elements 32 in the X-axis direction.

### (Advantageous Effects of Hub Bearing according to Fourth Embodiment)

The hub bearing 100D according to the fourth embodiment has the same advantageous effects as the hub bearing 100 according to the foregoing first embodiment. In the hub bearing 100D, the connecting piece 75 is attached to the tip portion 23a of the outer cylinder 23B. Since the connecting piece 75 is formed separately from the outer cylinder 23B, the connecting piece 75 can be formed with good precision. For example, by forming the connecting piece 75 made of an easily processable material, the contact surface 76a of the contact piece 76 can be formed with good precision.

In the hub bearing 100D, since the flange 80 is formed in the outer cylinder 23B, the flange 80 can cover the first seal 40 in the X-axis direction. Thus, the lip portions 42d through 42f can be prevented from being exposed to the outside, and the reliability of the hub bearing 100D can be improved. In the hub bearing 100D, the sealing performance by the first seal 40 can be improved.

### <Hub Bearing according to Fifth Embodiment>

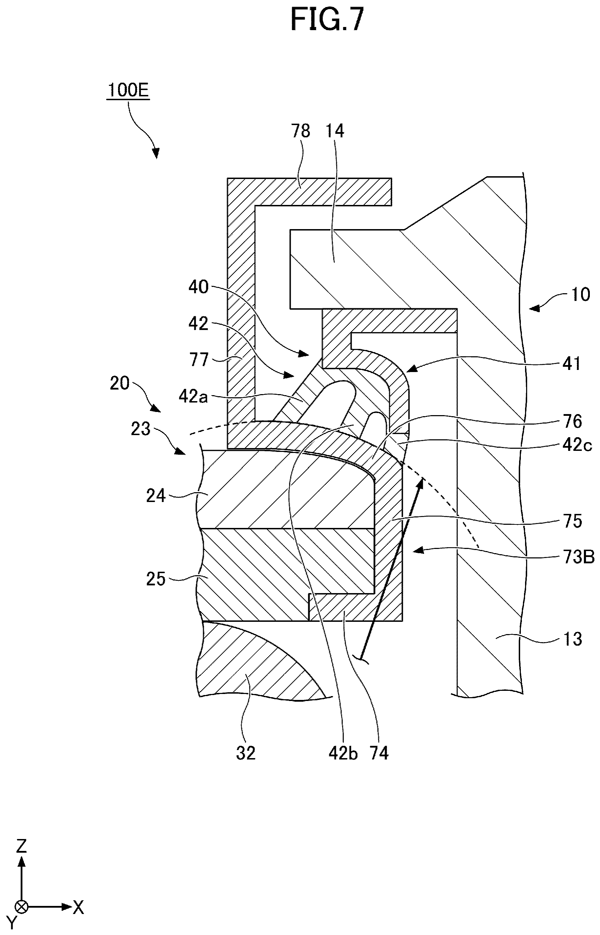

Next, a hub bearing 100E according to the fifth embodiment will be described with reference to FIG. 7. FIG. 7 is an enlarged cross-sectional view illustrating an essential part of the hub bearing according to the fifth embodiment, particularly a first seal provided in a gap between an inner member and an outer member. The hub bearing 100E illustrated in FIG. 7 differs from the hub bearing 100 according to the first embodiment in that the former includes an outer ring 73B attached to the tip portion 23a of the outer cylinder 23. In the description of the fifth embodiment, the same description as that of the first through fourth embodiments is omitted.

### <Outer Ring>

The outer member 20 of the hub bearing 100E includes an outer ring 73B attached to the tip portion of the outer cylinder 23. The outer ring 73B has an attaching piece 74, a connecting piece 75, a contact piece 76, a first covering piece 77, and a second covering piece 78. The first covering piece 77 is bent from the contact piece 76 and projects outward in the radial direction of the rotating shaft. The thickness direction of the first covering piece 77 is along the X-axis direction. The first covering piece 77 is disposed to cover the first seal 40 and the inner ring outer cylinder 14 from the outboard side in the vehicle width direction, as viewed along the X-axis direction. The outer diameter of the first covering piece 77 is larger than the outer diameter of the inner ring outer cylinder 14.

The second covering piece 78 is folded back from the first covering piece 77 and projects in the X-axis direction. The thickness direction of the second covering piece 78 is along the radial direction of the rotating shaft. The second covering piece 78 is disposed farther outward than the inner ring outer cylinder 14 in the radial direction. The second covering piece 78 is disposed to cover the outer peripheral surface of the inner ring outer cylinder 14 from the outboard side in the radial direction.

A slight gap is formed between the first covering piece 77 and the inner ring outer cylinder 14 in the X-axis direction. A slight gap is formed between the second covering piece 78 and the inner ring outer cylinder 14 in the radial direction of the rotating shaft. An inclined surface included in the outer peripheral surface of the inner member 10 is formed near the tip of the second coating piece 78 in the X-axis direction.

### (Advantageous Effects of Hub Bearing according to Fifth Embodiment)

The hub bearing 100E according to the fifth embodiment has the same advantageous effects as the hub bearing 100 according to the foregoing first embodiment. In the hub bearing 100E, the first covering piece 77 is formed so as to cover the first seal 40 in the X-axis direction. Thus, since the first seal 40 is not exposed to the outside, the possibility of damaging the first seal 40 can be reduced and reliability can be improved.

In the hub bearing 100E, the second covering piece 78 is formed so as to cover the inner ring outer cylinder 14 in the radial direction of the rotating shaft. Gaps extending in respective directions are formed between the outer ring 73B and the inner ring outer cylinder 14. In other words, a gap extending in the X-axis direction and a gap extending in the radial direction of the rotating shaft are formed between the outer ring 73B and the inner ring outer cylinder 14. In the hub bearing 100, a labyrinth structure leading to the first seal 40 is formed. Therefore, the entry of foreign matter into the gap adjacent to the first seal 40 can be suppressed, and the possibility of damage to the first seal 40 can be reduced. The reliability of the hub bearing 100E can be improved.

### <Hub Bearing according to Sixth Embodiment>

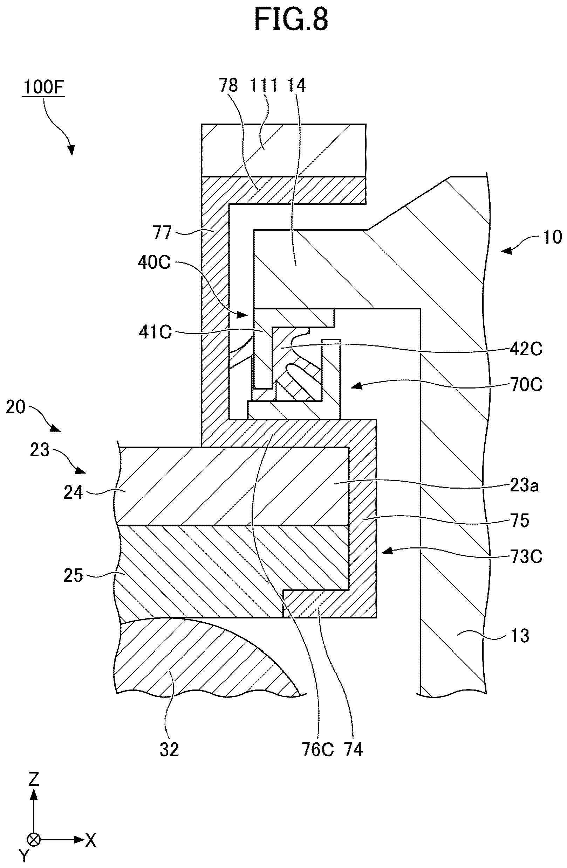

Next, a hub bearing 100F according to the sixth embodiment will be described with reference to FIG. 8. FIG. 8 is an enlarged cross-sectional view illustrating an essential part of the hub bearing according to the sixth embodiment, particularly a first seal provided in a gap between an inner member and an outer member. The hub bearing 100F illustrated in FIG. 8 differs from the hub bearing 100 according to the first embodiment in that the former includes a first seal 40C instead of the first seal 40, an outer ring 73C attached to the tip portion 23a of the outer cylinder 23, an outer ring 70C attached to the outer ring 73C, and a fin 110 for heat dissipation that is provided in the outer ring 73C. In the description of the sixth embodiment, the same description as that of the first through fifth embodiments is omitted.

### <First Seal>

The hub bearing 100F includes a first seal 40C. The first seal 40C seals the gap between the inner ring outer cylinder 14 of the inner member 10 and the outer cylinder 23 of the outer member 20. The first seal 40C has a ring shape and seals the gap between the inner peripheral surface of the inner ring outer cylinder 14 and the outer peripheral surface of the outer ring 70C along the entire periphery. The first seal 40C has the same configuration as the first seal 40B. The first seal 40C includes a first seal retainer ring 41C and a lip 42C. The first seal retainer ring 41C is, for example, a metal ring for retaining the lip 42C. The first seal retainer ring 41C has a first piece and a second piece. The cross-sectional shape of the first seal retainer ring 41C intersecting in the circumferential direction is, for example, L-shaped.

The thickness direction of the first piece is along the radial direction. The first piece is fixed to the inner peripheral surface of the inner ring outer cylinder 14. The second piece is folded back from the first piece and projects radially inward. The thickness direction of the second piece is along the X-axis direction. The second piece projects toward the tip portion 23a of the outer cylinder 23.

The lip 42C may be, for example, an elastic material, soft resin, rubber, or the like. The lip 42C may be a vulcanized rubber material. The lip 42C is retained by the first seal retainer ring 41C. The lip 42C has a plurality of lip portions. The plurality of lip portions 42d through 42f contact the outer peripheral surface of the outer ring 70C at respective positions.

The lip portion protrudes toward the outer ring 70 from a connecting portion between the first piece and the second piece, for example. The lip portion protrudes toward the outer ring 70C from the second piece, for example. The lip portion protrudes toward the outer ring 70C from the second piece, for example. The lip portion protrudes toward the first covering piece 77 from the second piece.

### <Outer Ring>

The outer member 20 of the hub bearing 100F includes outer rings 70C and 73C, and a fin 111 for heat dissipation.

The outer ring 73C has an attaching piece 74, a connecting piece 75, a contact piece 76C, a first covering piece 77, and a second covering piece 78. The outer ring 73C has the same configuration as the outer ring 73B. The outer ring 73C differs from the outer ring 73B in that it has a contact piece 76C instead of the contact piece 76. The outer peripheral surface of the contact piece 76C has an outer peripheral surface that is linear along the X-axis in a cross section along the X-axis.

The outer ring 70C is, for example, a ring made of metal. The cross section of the outer ring 70C in the circumferential direction is, for example, L-shaped. The outer ring 70C is mounted to the outer periphery of the contact piece 76C of the outer ring 73C. The outer ring 70C is press-fitted into the contact piece 76C.

The outer ring 70C has a first piece and a second piece. The thickness direction of the first piece is along the radial direction of the rotating shaft. The first piece is fixed to the outer peripheral surface of the contact piece 76. The second piece is bent from the first piece and protrudes outward in the radial direction of the rotating shaft. The thickness direction of the second piece is along the X-axis direction.

The first piece of the outer ring 70C faces the first piece of the first seal retainer ring 41C of the first seal 40C in the radial direction of the rotating shaft. The second piece of the outer ring 70C faces the second piece of the first seal retainer ring 41C of the first seal 40C in the X-axis direction. The outer rings 70C and 73C rotate integrally with the outer cylinder 23.

### <Fin for Heat Dissipation>

The fin 111 is, for example, a ring made of metal. The thermal conductivity of the material of the fin 111 is higher than that of the outer ring 73. The fin 111 has a cylindrical shape, for example. The fin 111 is provided on the outer peripheral surface of the second coating piece 78.

### (Advantageous Effects of Hub Bearing according to Sixth Embodiment)

The hub bearing 100F according to the sixth embodiment has the same advantageous effects as the hub bearing 100E according to the foregoing fifth embodiment. Since the hub bearing 100F includes the fin 111 for heat dissipation provided in the outer ring 73B, the outer ring 73B can be cooled by heat dissipation through the fin 111. In the hub bearing 100F, the temperature rise of the outer ring 70C and the first seal 40C can be suppressed by cooling the outer ring 73C. In the hub bearing 100C, the temperature rise of the outer member 20, grease, and rolling elements 31 and 32 can be suppressed by cooling the outer ring 73C.

### <Hub Bearing according to Seventh Embodiment>

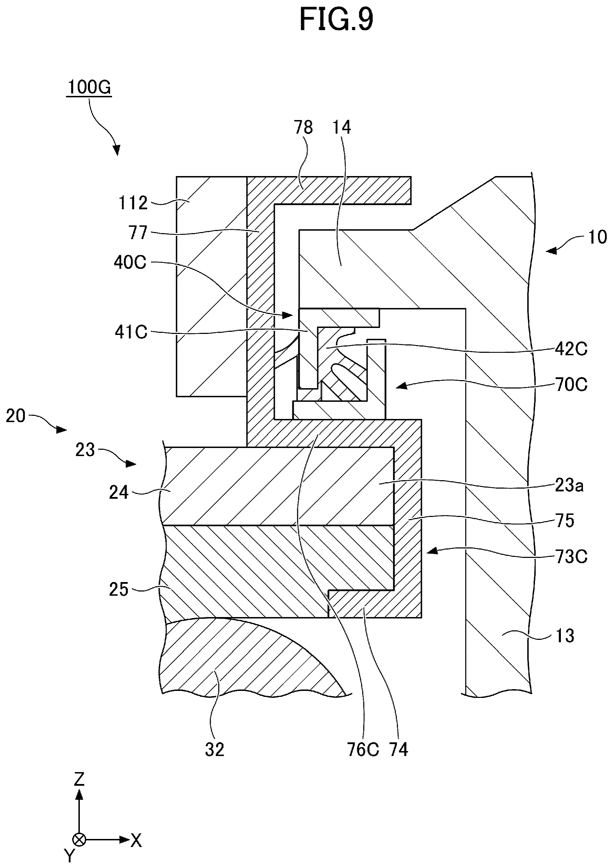

Next, a hub bearing 100G according to the seventh embodiment will be described with reference to FIG. 9. FIG. 9 is an enlarged cross-sectional view illustrating an essential part of the hub bearing according to the seventh embodiment, particularly a first seal provided in a gap between an inner member and an outer member. The hub bearing 100G illustrated in FIG. 9 differs from the hub bearing 100F according to the sixth embodiment in that it is provided with a fin 112 provided on the first covering piece 77 instead of the fin 111 provided on the second covering piece 78. In the description of the seventh embodiment, the same description as that of the first through sixth embodiments is omitted.

The fin 112 protrudes from the first covering piece 77 to the side opposite to the inner ring outer cylinder 14 in the X-axis direction. A plurality of fins 112 are provided at predetermined intervals in the circumferential direction, for example. The fin 112 has a predetermined length in the radial direction of the rotating shaft. The fins 112 may be integrally formed with the first covering piece 77. The fins 112 may be an uneven shape formed on the side surface of the first covering piece 77. By increasing the surface area of the first covering piece 77, heat dissipation by the first covering piece 77 can be promoted.

### (Advantageous Effects of Hub Bearing according to Seventh Embodiment)

The hub bearing 100G according to the seventh embodiment has the same advantageous effects as the hub bearing 100F according to the foregoing sixth embodiment. Since the hub bearing 100G includes the fin 112 for heat dissipation provided in the outer ring 73C, the outer ring 73C can be cooled by heat dissipation through the fin 112. In the hub bearing 100G, the temperature rise of the outer ring 70C and the first seal 40C can be suppressed by cooling the outer ring 73C. In the hub bearing 100F, the temperature rise of the outer member 20, grease, and rolling elements 31 and 32 can be suppressed by cooling the outer ring 73C.

### <Hub Bearing according to Eighth Embodiment>

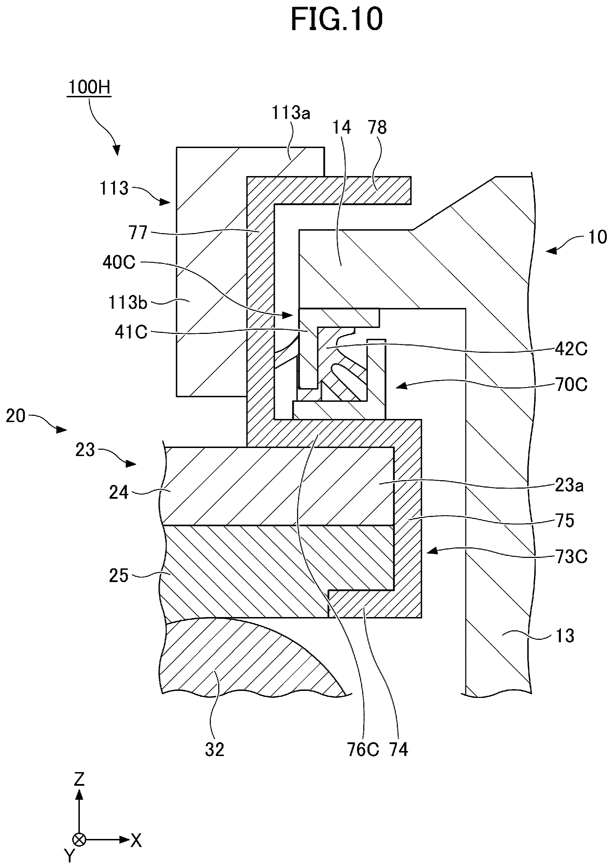

Next, a hub bearing 100H according to the eighth embodiment will be described with reference to FIG. 10. FIG. 10 is an enlarged cross-sectional view illustrating an essential part of the hub bearing according to the eighth embodiment, particularly a first seal provided in a gap between an inner member and an outer member. The hub bearing 100H illustrated in FIG. 10 differs from the hub bearing 100G according to the seventh embodiment in that it is provided with a fin 113 instead of the fin 112. In the description of the eighth embodiment, the same description as that of the first through seventh embodiments is omitted.

### <Fin for Heat Dissipation>

The fin 113 has a ring portion 113a and a fin portion 113b. The ring portion 113a is mounted to the outer periphery of the second covering piece 78. The ring portion 113a is mounted to the outer periphery of the second covering piece 78 by fitting.

A plurality of fin portions 113b extend radially inward from the ring portion 113a. The plurality of fin portions 113b are provided at predetermined intervals in the circumferential direction. The fin portions 113b are in contact with the first covering piece 77. The heat of the outer ring 73C is transferred to the fin 113 and dissipated.

### (Advantageous Effects of Hub Bearing according to Eighth Embodiment)

The hub bearing 100H according to the eighth embodiment has the same advantageous effects as the hub bearing 100G according to the foregoing seventh embodiment. Since the hub bearing 100H includes the fin 113 for heat dissipation provided in the outer ring 73C, the outer ring 73C can be cooled by heat dissipation through the fin 113. In the hub bearing 100H, the temperature rise of the outer ring 70C and the first seal 40C can be suppressed by cooling the outer ring 73C. In the hub bearing 100G, the temperature rise of the outer member 20, grease, and rolling elements 31 and 32 can be suppressed by cooling the outer ring 73C.

### <Hub Bearing according to Ninth Embodiment>

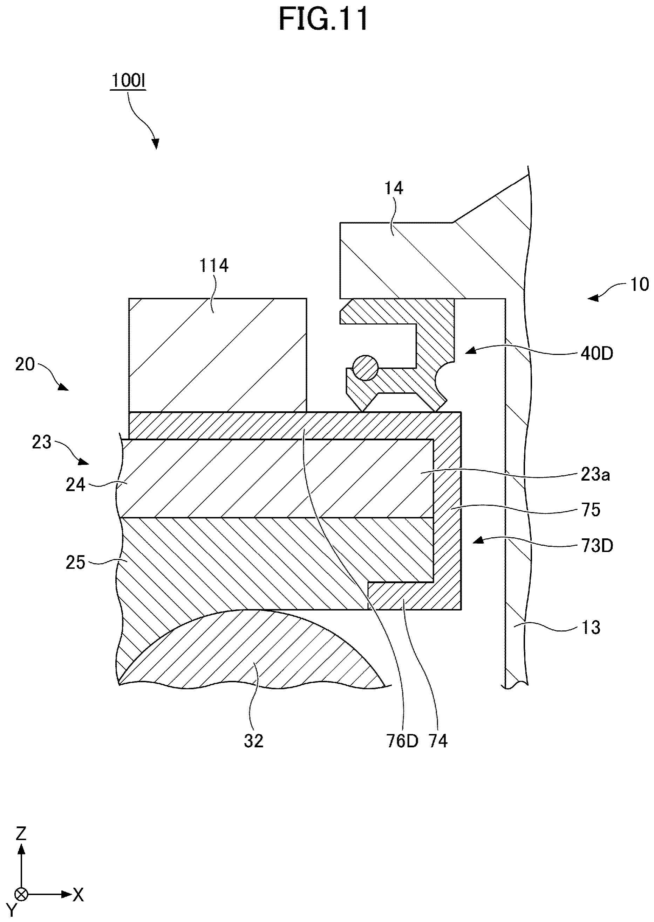

Next, a hub bearing 100I according to the ninth embodiment will be described with reference to FIG. 11. FIG. 11 is an enlarged cross-sectional view illustrating an essential part of the hub bearing according to the ninth embodiment, particularly a first seal provided in a gap between an inner member and an outer member. The hub bearing 100I illustrated in FIG. 11 differs from the hub bearing 100 according to the first embodiment in that the former includes a first seal 40D instead of the first seal 40, an outer ring 73D mounted to the tip portion 23a of the outer cylinder 23, and a fin 114 formed on the outer peripheral surface of the outer ring 73D. In the description of the ninth embodiment, the same description as that of the first through eighth embodiments is omitted.

### <First Seal>

The first seal 40D seals the gap between the inner ring outer cylinder 14 of the inner member 10 and the outer cylinder 23 of the outer member 20. The first seal 40D has a ring shape and seals the gap between the inner peripheral surface of the inner ring outer cylinder 14 and the outer peripheral surface of the outer ring 73D along the entire periphery. The cross-sectional shape of the first seal 40D intersecting in the circumferential direction may be similar to, for example, the second seal 50. The first seal 40D has a plurality of lip portions contacting the outer peripheral surface of the outer ring 73D. The first seal 40D may have the same configuration as the first seals 40, 40B, and 40C.

### <Outer Ring>

The outer member 20 of the hub bearing 100I includes an outer ring 73D, and a fin 114 for heat dissipation.

The outer ring 73D has an attaching piece 74, a connecting piece 75, and a contact piece 76D. The outer ring 73D has the same configuration as the outer ring 73. The outer ring 73D differs from the outer ring 73 in that it has a contact piece 76D instead of the contact piece 76. The outer peripheral surface of the contact piece 76D has an outer peripheral surface that is linear along the X-axis in a cross section along the X-axis. The contact piece 76D has a predetermined length in the X-axis direction. The contact piece 76D is formed to the same position as the tip portion 23a of the outer cylinder 23 and the rolling elements 32 in the X-axis direction. The contact piece 76D includes a portion that contacts the first seal 40D and a portion that contacts the fin 114.

### <Fin for Heat Dissipation>

The fin 114 is, for example, a ring made of metal. The thermal conductivity of the material of the fin 114 is higher than that of the outer ring 73D. The fin 114 has a cylindrical shape, for example. The fin 114 is provided on the outer peripheral surface of the contact piece 76D. The fin 114 may include a projecting portion projecting radially outward from the outer ring 73D. The fin 114 may be made of the same material as the outer ring 73D, or may be integrally molded. The heat of the outer ring 73D is transferred to the fin 114 and dissipated.

### (Advantageous Effects of Hub Bearing according to Ninth Embodiment)

The hub bearing 100I according to the ninth embodiment has the same advantageous effects as the hub bearing 100G according to the foregoing eighth embodiment. Since the hub bearing 100I includes the fin 114 for heat dissipation provided in the outer ring 73D, the outer ring 73D can be cooled by heat dissipation through the fin 114. In the hub bearing 100I, the temperature rise of the outer member 20, grease, and rolling elements 31 and 32 can be suppressed by cooling the outer ring 73D.

### <Hub Bearing according to Tenth Embodiment>

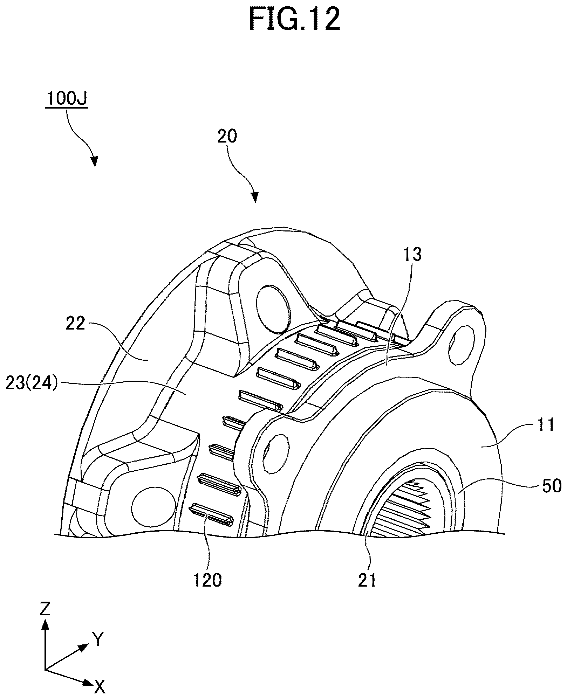

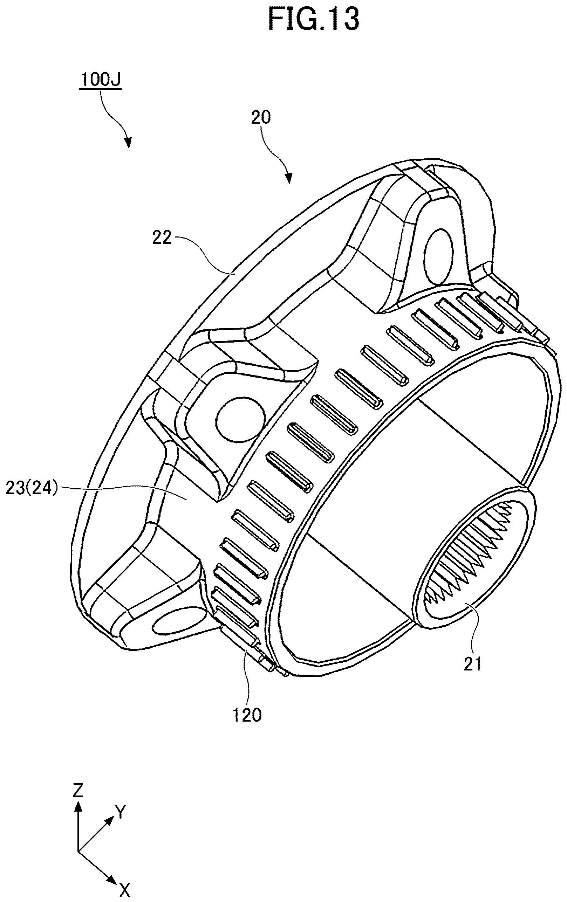

Next, a hub bearing 100J according to the tenth embodiment will be described with reference to FIGS. 12 and 13. FIG. 12 is a perspective view illustrating a part of a hub bearing according to the tenth embodiment. FIG. 13 is a perspective view illustrating an outer member of a hub bearing according to the tenth embodiment. The hub bearing 100J illustrated in FIGS. 12 and 13 is different from the hub bearing 100 according to the first embodiment in that the former includes a plurality of fins 120 formed on the outer peripheral surface of the outer cylinder 23. In the description of the tenth embodiment, the same description as that of the first through ninth embodiments is omitted.

### <Fin for Heat Dissipation>

Each of the fins 120 has a projecting portion projecting radially outward from the outer peripheral surface of the outer cylinder 23. Each of the fins 120 extends along the X-axis direction. The fins 120 are formed at predetermined intervals in the circumferential direction. The fins 120 are an example of a heat dissipation structure having an uneven shape. The fins 120 rotate around a rotating shaft together with the outer cylinder 23. The outer cylinder 23 of the hub bearing 100J is exposed to the outside and is in contact with the outside air. As the wheels rotate, the vehicle body moves. When the outer cylinder 23 rotates and moves in the Y-axis direction, turbulence is generated in the air flow around the outer cylinder 23 by the fins 120. Thus, the heat transfer coefficient between the outer peripheral surface of the outer cylinder 23 and the outside air is improved, and the heat dissipation property of the outer cylinder 23 can be improved.

In a hub bearing according to prior art, a gap between an inner member and an outer member is filled with grease. The temperature of the grease filled in the hub bearing rises due to shear-induced heat generation during use. If the temperature of the hub bearing rises due to the shear-induced heat generated by the grease, the life and performance of the hub bearing may be affected.

### (Advantageous Effects of Hub Bearing according to Tenth Embodiment)

The hub bearing 100I according to the tenth embodiment has the same advantageous effects as the hub bearing 100I according to the foregoing ninth embodiment. In the hub bearing 100I, since the fins 120 are provided on the outer peripheral surface of the outer cylinder 23, turbulent flow is generated by the rotation of the outer cylinder 23, and the heat transfer coefficient between the outer cylinder 23 and the outside air can be improved. Thus, heat dissipation in the outer cylinder 23 is promoted, and the temperature rise of the outer member 20, the grease, the rolling elements 31 and 32, and the inner member 10 can be suppressed. In the hub bearing 100I, the surface area can be increased by the fins 120, and the heat transfer area in contact with the outside air can be increased, and heat dissipation can be promoted. As a result, the temperature rise of the hub bearing 100I can be suppressed.

According to the hub bearing 100I, the influence by the shear-induced heat generation of the grease can be suppressed by suppressing the temperature rise of the grease. According to the hub bearing 100I, the temperature rise of grease can be suppressed, and an increase in the shear resistance of grease can be suppressed. In the hub bearing 100, an increase in the air resistance associated with the occurrence of turbulence is expected, but it is significantly smaller than the shear resistance caused by grease. Therefore, the influence of an increase in the air resistance associated with the occurrence of turbulence can be ignored. In the hub bearing 100I, a decrease in lubricity can be suppressed by suppressing the temperature rise of grease, and the torque performance can be maintained. In the hub bearing 100I, the torque performance can be improved compared with a hub bearing of prior art.

In the hub bearing 100I, the temperature rise can be suppressed by the fins 120, the temperature rise of grease can be suppressed, and the influence on the life and performance of the hub bearing 100I can be avoided. As a result, the reliability of the hub bearing 100I can be improved.

### <Hub Bearing according to Eleventh Embodiment>

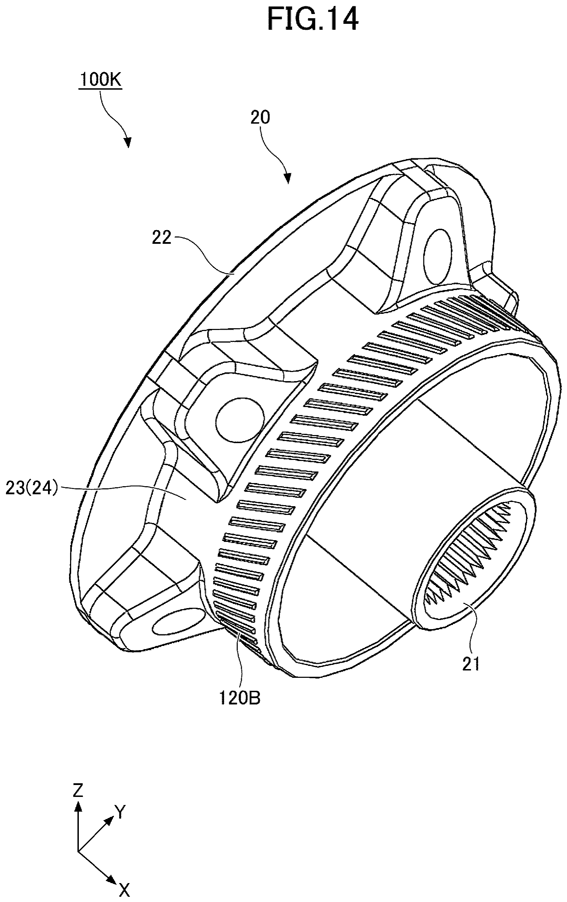

Next, a hub bearing 100K according to the eleventh embodiment will be described with reference to FIG. 14. FIG. 14 is a perspective view illustrating an outer member of a hub bearing according to the eleventh embodiment. The hub bearing 100K illustrated in FIG. 14 differs from the hub bearing 100J according to the tenth embodiment illustrated in FIG. 13 in that the shape of the fins 120B formed on the outer peripheral surface of the outer cylinder 23 is different. In the description of the eleventh embodiment, the same description as that of the first through tenth embodiments is omitted.

When the outer peripheral surface of the outer cylinder 23 is viewed along the radial direction, the fins 120B are disposed in such a manner that the fins 120B are inclined with respect to the X-axis direction. As described above, the shape of the fins 120B is not limited to a linear extension along the X-axis direction, but may be inclined with respect to the X-axis direction. The hub bearing 100K exhibits the same advantageous effects as the hub bearing 100J.

### <Hub Bearing according to Twelfth Embodiment>

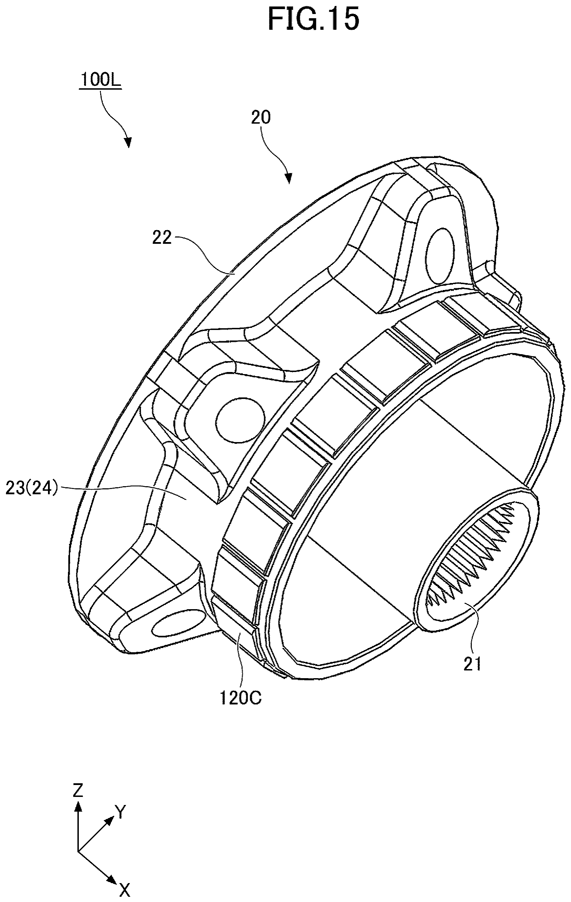

Next, a hub bearing 100L according to the twelfth embodiment will be described with reference to FIG. 15. FIG. 15 is a perspective view illustrating an outer member of a hub bearing according to the twelfth embodiment. The hub bearing 100L having the outer member 20 as illustrated in FIG. 15 differs from the hub bearing 100J according to the tenth embodiment illustrated in FIG. 13 in that a plurality of heat dissipation structures 120C are provided, instead of the fins 120B formed on the outer peripheral surface of the outer cylinder 23. In the description of the twelfth embodiment, the same description as that of the first through eleventh embodiments is omitted.

In the case where the outer peripheral surface of the outer cylinder 23 is viewed along the radial direction, each of the heat dissipation structures 120C is formed in a rectangular shape. The heat dissipation structures 120C are formed so as to project from the outer peripheral surface of the outer cylinder 23. In the circumferential direction, a gap is formed between adjacent heat dissipation structures 120C. The gap is formed linearly along the X-axis direction. The plurality of heat dissipation structures 120C and the gap between them form an uneven shape on the outer peripheral surface of the outer cylinder 23. Thus, the hub bearing 100L may have rectangular heat dissipation structures 120C. The hub bearing 100L exhibits the same advantageous effects as the hub bearing 100J.

### <Hub Bearing according to Thirteenth Embodiment>

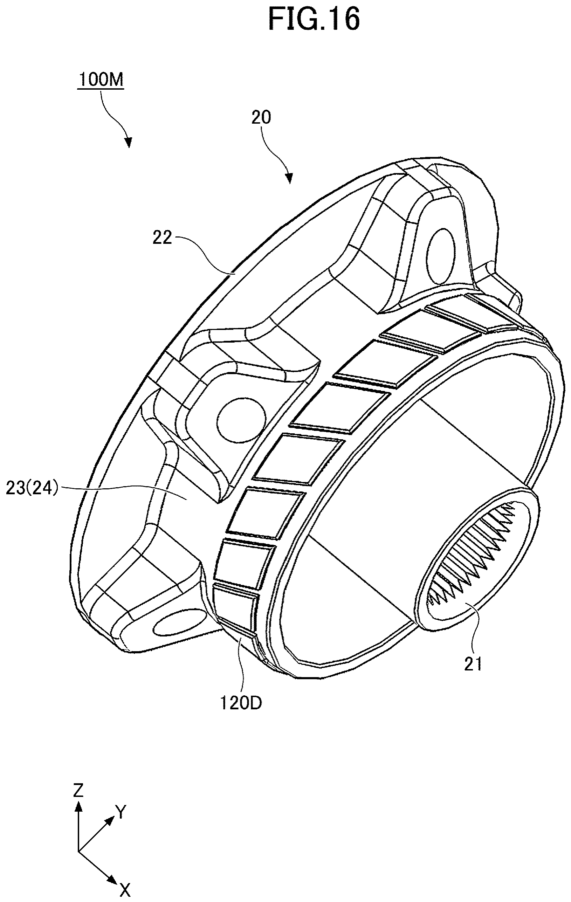

Next, a hub bearing 100M according to the thirteenth embodiment will be described with reference to FIG. 16. FIG. 16 is a perspective view illustrating an outer member of a hub bearing according to the thirteenth embodiment. The hub bearing 100M including the outer member 20 illustrated in FIG. 16 differs from the hub bearing 100L according to the twelfth embodiment in that the shape of a plurality of heat dissipation structures 120D formed on the outer peripheral surface of the outer cylinder 23 is different. In the description of the thirteenth embodiment, the same description as that of the first through twelfth embodiments is omitted.

In the case where the outer peripheral surface of the outer cylinder 23 is viewed along the radial direction, each of the heat dissipation structures 120D is formed in a parallelogram shape. The heat dissipation structure 120D is formed so as to project from the outer peripheral surface of the outer cylinder 23. In the circumferential direction, a gap is formed between adjacent heat dissipation structures 120D. The gap is formed so as to be inclined in the X-axis direction. The plurality of heat dissipation structures 120D and the gap between them form an uneven shape on the outer peripheral surface of the outer cylinder 23. Thus, the hub bearing 100M may have rectangular heat dissipation structures 120D. The hub bearing 100M exhibits the same advantageous effects as the hub bearing 100M.

### <Hub Bearing according to Fourteenth Embodiment>

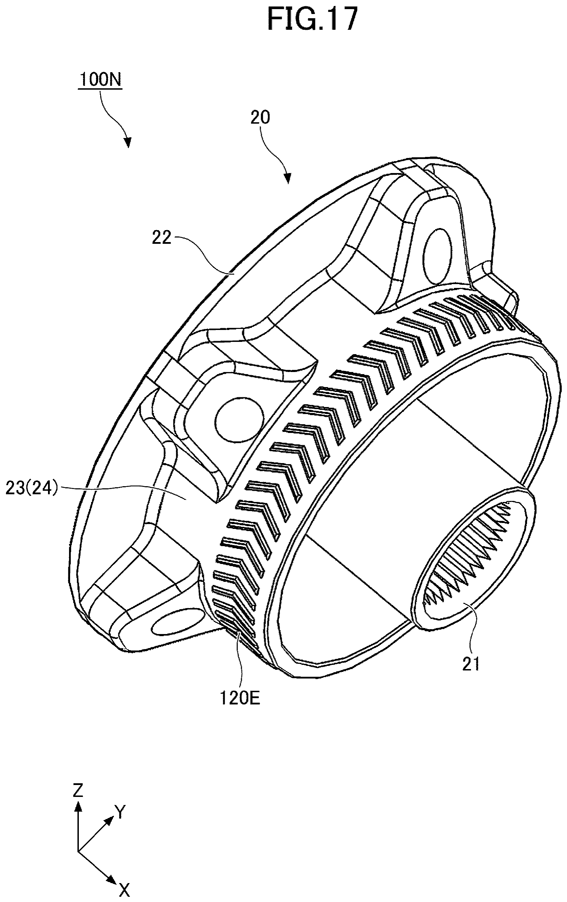

Next, a hub bearing 100N according to the fourteenth embodiment will be described with reference to FIG. 17. FIG. 17 is a perspective view illustrating an outer member of a hub bearing according to the fourteenth embodiment. The hub bearing 100N including the outer member 20 as illustrated in FIG. 17 differs from the hub bearing 100J according to the tenth embodiment in that the shape of a plurality of fins 120E formed on the outer peripheral surface of the outer cylinder 23 is different. In the description of the fourteenth embodiment, the same description as that of the first through thirteenth embodiments is omitted.

In the case where the outer peripheral surface of the outer cylinder 23 is viewed along the radial direction, each of the fins 120E is formed in a V shape. Each of the fins 120E may be bent so as to have a vertex at the center in the longitudinal direction. The fins 120E are not limited to a linear extension, but may be bent. The hub bearing 100N exhibits the same advantageous effects as the hub bearing 100J.

### <Hub Bearing according to Fifteenth Embodiment>

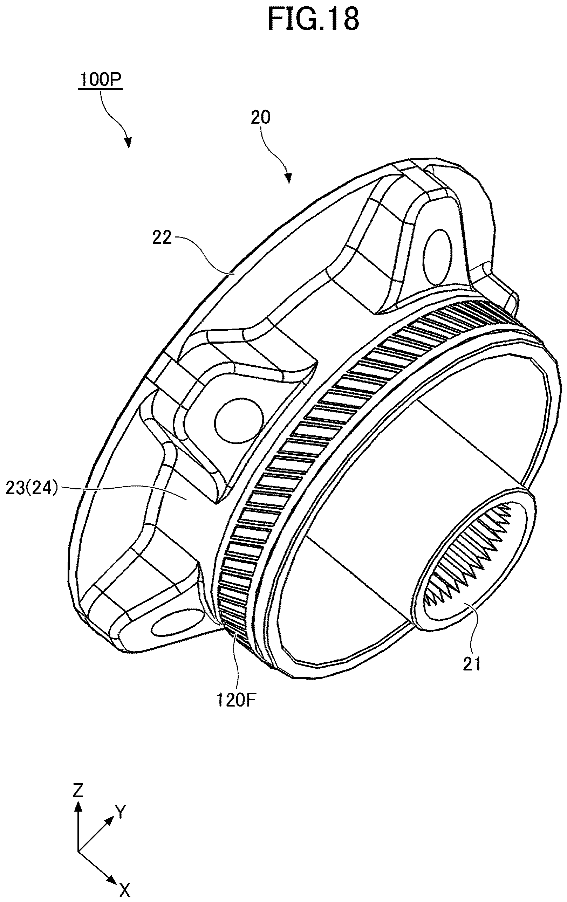

Next, a hub bearing 100P according to the fifteenth embodiment will be described with reference to FIG. 18. FIG. 18 is a perspective view illustrating an outer member of a hub bearing according to the fifteenth embodiment. The hub bearing 100P including the outer member 20 as illustrated in FIG. 18 differs from the hub bearing 100K according to the eleventh embodiment illustrated in FIG. 14 in that the shape of a heat dissipation structure 120F formed on the outer peripheral surface of the outer cylinder 23 is different. In the description of the fifteenth embodiment, the same description as that of the first through fourteenth embodiments is omitted.

In the case where the outer peripheral surface of the outer cylinder 23 is viewed along the radial direction, the heat dissipation structure 120F includes a plurality of ring portions that are continuous in the circumferential direction and oblique portions that are oblique with respect to the X-axis direction between the ring portions. The plurality of ring portions are disposed apart in the X-axis direction. The oblique portions are formed so as to connect the plurality of ring portions. The plurality of oblique portions are formed apart in the circumferential direction. A portion surrounded by adjacent oblique portions and between ring portions is recessed. Thus, the heat dissipation structure 120F may have portions extending in a plurality of directions. The hub bearing 100P having such a configuration exhibits the same advantageous effects as the hub bearing 100K.

In the hub bearing 100P, the rigidity of the heat dissipation structure 120F is improved by providing the heat dissipation structure 120F having portions extending in a plurality of directions. In the hub bearing 100P, the heat dissipation structure 120F can be mounted to the outer cylinder 23 by press-fitting the heat dissipation structure 120F having the integrally molded ring portions to the outer cylinder 23.

### <Hub Bearing according to Sixteenth Embodiment>

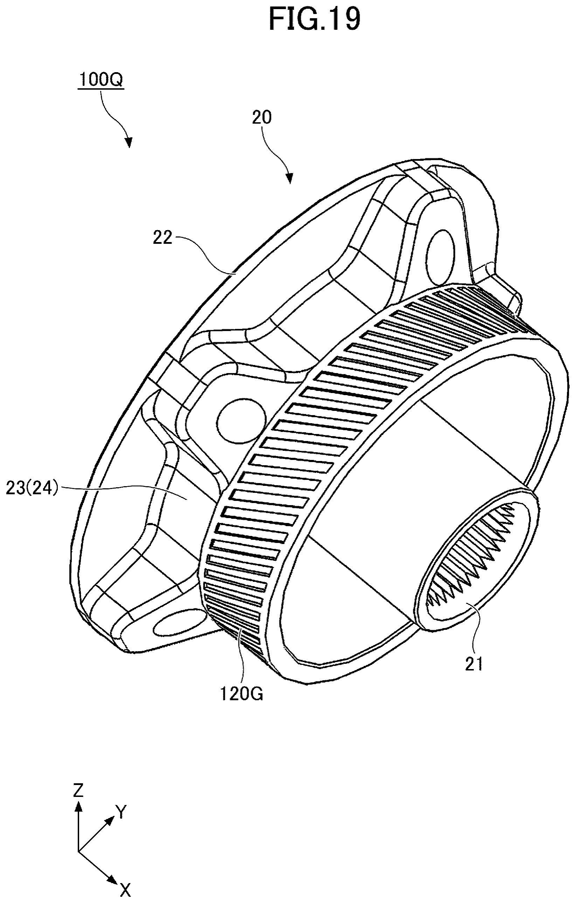

Next, a hub bearing 100Q according to the sixteenth embodiment will be described with reference to FIG. 19. FIG. 19 is a perspective view illustrating an outer member of a hub bearing according to the sixteenth embodiment. The hub bearing 100Q including the outer member 20 as illustrated in FIG. 19 differs from the hub bearing 100P according to the fifteenth embodiment illustrated in FIG. 18 in that the shape of a heat dissipation structure 120G formed on the outer peripheral surface of the outer cylinder 23 is different. In the description of the sixteenth embodiment, the same description as that of the first through fifteenth embodiments is omitted.

In the case where the outer peripheral surface of the outer cylinder 23 is viewed along the radial direction, the heat dissipation structure 120G includes a plurality of ring portions that are continuous in the circumferential direction and oblique portions that are oblique in the X-axis direction between the ring portions. The plurality of ring portions are arranged apart in the X-axis direction. In the X-axis direction, the distance between the plurality of ring portions of the heat dissipation structure 120G is larger than the distance between the plurality of ring portions of the heat dissipation structure 120F illustrated in FIG. 18. The oblique portions of the heat dissipation structure 120G illustrated in FIG. 19 are oblique in a direction different from the oblique portions of the heat dissipation structure 120F illustrated in FIG. 18. The hub bearing 100Q having such a heat dissipation structure 120G exhibits the same advantageous effects as the hub bearing 100P.

### <Hub Bearing according to Seventeenth Embodiment>

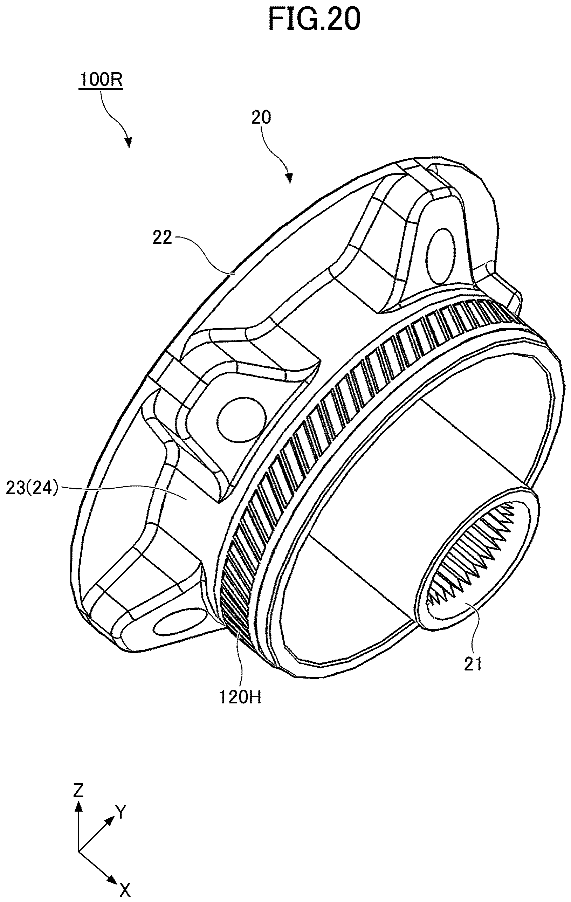

Next, a hub bearing 100R according to the seventeenth embodiment will be described with reference to FIG. 20. FIG. 20 is a perspective view illustrating an outer member of a hub bearing according to the seventeenth embodiment. The hub bearing 100R having the outer member 20 as illustrated in FIG. 20 differs from the hub bearing 100P according to the fifteenth embodiment illustrated in FIG. 18 in that the shape of a heat dissipation structure 120H formed on the outer peripheral surface of the outer cylinder 23 is different. In the description of the seventeenth embodiment, the same description as that of the first through sixteenth embodiments is omitted.

In the case where the outer peripheral surface of the outer cylinder 23 is viewed along the radial direction, the heat dissipation structure 120H includes a plurality of ring portions that are continuous in the circumferential direction and oblique portions that are oblique with respect to the X-axis direction between the ring portions. The oblique portions of the heat dissipation structure 120H illustrated in FIG. 20 are oblique in a different direction from the oblique portions of the heat dissipation structure 120F illustrated in FIG. 18. The hub bearing 100R having such a heat dissipation structure 120H exhibits the same advantageous effects as the hub bearing 100P.

### <Hub Bearing according to Eighteenth Embodiment>

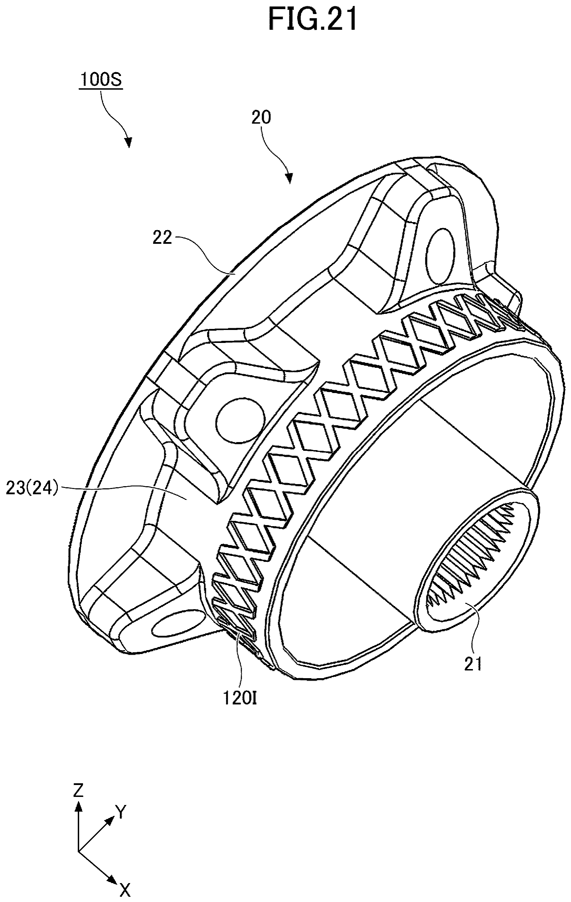

Next, a hub bearing 100S according to the eighteenth embodiment will be described with reference to FIG. 21. FIG. 21 is a perspective view illustrating an outer member of a hub bearing according to the eighteenth embodiment. The hub bearing 100S having the outer member 20 as illustrated in FIG. 21 differs from the hub bearing 100N according to the fourteenth embodiment illustrated in FIG. 17 in that the shape of a heat dissipation structure 120I formed on the outer peripheral surface of the outer cylinder 23 is different. In the description of the eighteenth embodiment, the same description as that of the first through seventeenth embodiments is omitted.

In the case where the outer peripheral surface of the outer cylinder 23 is viewed along the radial direction, the heat dissipation structure 120I is formed in an X shape. The heat dissipation structure 120I has a plurality of straight portions oblique in different directions with respect to the X-axis direction. Adjacent straight portions intersect each other, forming an X shape. Adjacent straight portions of the heat dissipation structure 120I in the circumferential direction may be arranged to form a rhombus shape. The area surrounded by the straight portions of the heat dissipation structure 120I is recessed. The hub bearing 100S having such a heat dissipation structure 120I exhibits the same advantageous effects as the hub bearing 100I.

### <Hub Bearing according to Nineteenth Embodiment>

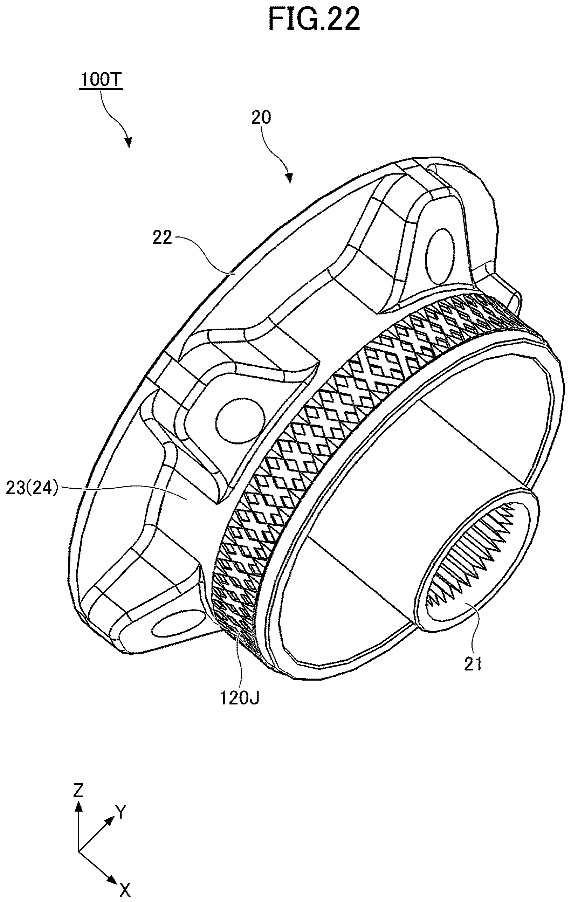

Next, a hub bearing 100T according to the nineteenth embodiment will be described with reference to FIG. 22. FIG. 22 is a perspective view illustrating an outer member of a hub bearing according to the nineteenth embodiment. The hub bearing 100T including the outer member 20 as illustrated in FIG. 22 differs from the hub bearing 100S according to the eighteenth embodiment illustrated in FIG. 21 in that the shape of a heat dissipation structure 120J formed on the outer peripheral surface of the outer cylinder 23 is different. In the description of the nineteenth embodiment, the same description as that of the first through eighteenth embodiments is omitted.

When the outer peripheral surface of the outer cylinder 23 is viewed along the radial direction, the heat dissipation structure 120J has a plurality of straight portions oblique in different directions with respect to the X-axis direction. Adjacent straight portions intersect each other, forming an X shape. In the heat dissipation structure 120J, the distance between the straight portions is narrower than in the heat dissipation structure 120I. The straight portions of the heat dissipation structure 120I adjacent in the circumferential direction may be arranged to form a rhombus shape. The area surrounded by the straight portions of the heat dissipation structure 120J is recessed.

The hub bearing 100T having such a heat dissipation structure 120J has the same advantageous effect as the hub bearing 100I. One straight portion may be arranged to intersect more than one straight portion. The number of rhombus-shaped recesses formed by the plurality of straight portions of the heat dissipation structure 120J is larger than the number of rhombus-shaped recesses formed by the plurality of straight portions of the heat dissipation structure 120I. The area of the recesses formed by the plurality of straight portions of the heat dissipation structure 120J is smaller than the area of the recesses formed by the plurality of straight portions of the heat dissipation structure 120I.

### <Hub Bearing according to Twentieth Embodiment>

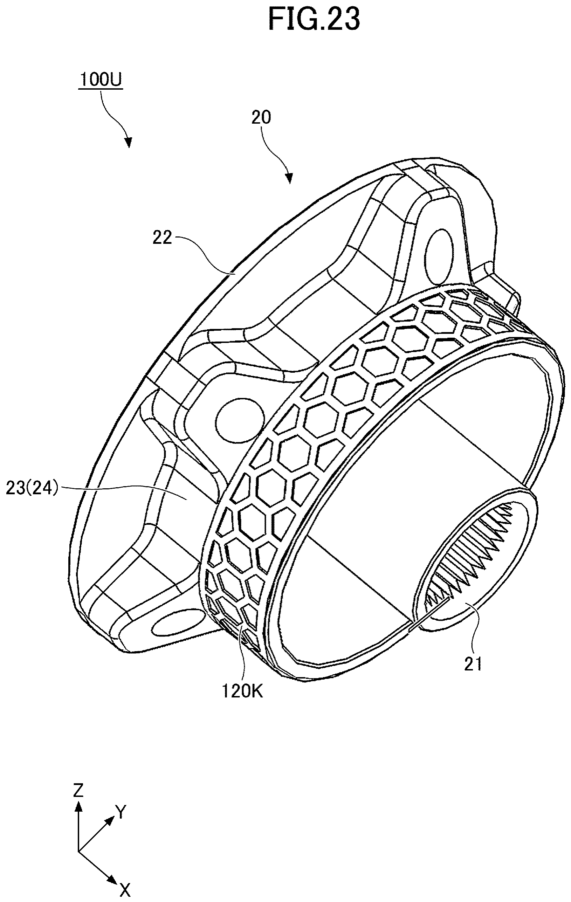

Next, a hub bearing 100U according to the twentieth embodiment will be described with reference to FIG. 23. FIG. 23 is a perspective view illustrating an outer member of a hub bearing according to the twentieth embodiment. The hub bearing 100U including the outer member 20 as illustrated in FIG. 23 differs from the hub bearing 100T according to the nineteenth embodiment illustrated in FIG. 22 in that the shape of the heat dissipation structure 120K formed on the outer peripheral surface of the outer cylinder 23 is different. In the description of the twentieth embodiment, the same description as that of the first through nineteenth embodiments is omitted.

In the case where the outer peripheral surface of the outer cylinder 23 is viewed along the radial direction, the heat dissipation structure 120K has a plurality of ring portions continuous in the circumferential direction and a plurality of straight portions are arranged to form hexagons. The plurality of ring portions are arranged apart in the X-axis direction. The plurality of straight portions are arranged between the plurality of ring portions and connected to each other. The plurality of straight portions are connected to the plurality of oblique portions. The heat dissipation structure 120K may have a honeycomb structure. Thus, the heat dissipation structure 120K may have a structure having a plurality of ring portions and a plurality of straight portions.

### <Hub Bearing according to Twenty-first Embodiment>

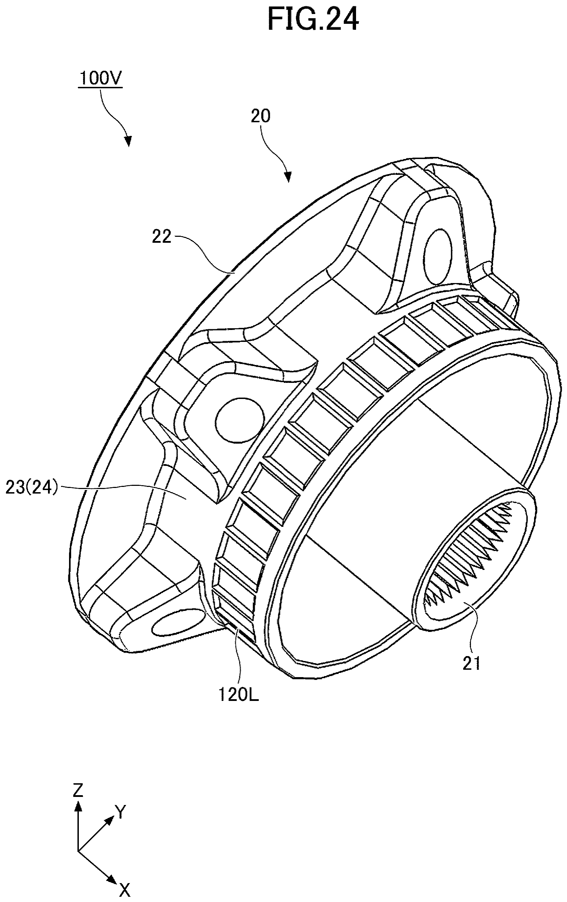

Next, a hub bearing 100V according to the twenty-first embodiment will be described with reference to FIG. 24. FIG. 24 is a perspective view illustrating an outer member of a hub bearing according to the twenty-first embodiment. The hub bearing 100V including the outer member 20 as illustrated in FIG. 24 differs from the hub bearing 100L according to the twelfth embodiment illustrated in FIG. 15 in that the shape of a plurality of heat dissipation structures 120L formed on the outer peripheral surface of the outer cylinder 23 is different. In the description of the twenty-first embodiment, the same description as that of the first through twentieth embodiments is omitted.

In the case where the outer peripheral surface of the outer cylinder 23 is viewed along the radial direction, each of the heat dissipation structure 120L portions is formed in a rectangular shape. Each of the heat dissipation structure 120L portions is formed so as to be recessed from the outer peripheral surface of the outer cylinder 23. Along the circumferential direction, a plurality of projecting portions extending in the X-axis direction are formed between respective adjacent heat dissipation structures 120L. The projecting portions are formed linearly along the X-axis direction. The plurality of heat dissipation structures 120L and the projecting portions therebetween form an uneven shape on the outer peripheral surface of the outer cylinder 23. As described above, the hub bearing 100V may have a plurality of rectangular heat dissipation structures 120L each having a recess. The hub bearing 100V exhibits the same advantageous effects as the hub bearing 100L. The heat dissipation structure 120L is not limited to a rectangular shape, but may be trapezoidal, triangular, circular, or any other shape. The heat dissipation structure may be the projecting portion or a recess.

### <Hub Bearing according to Twenty-second Embodiment>

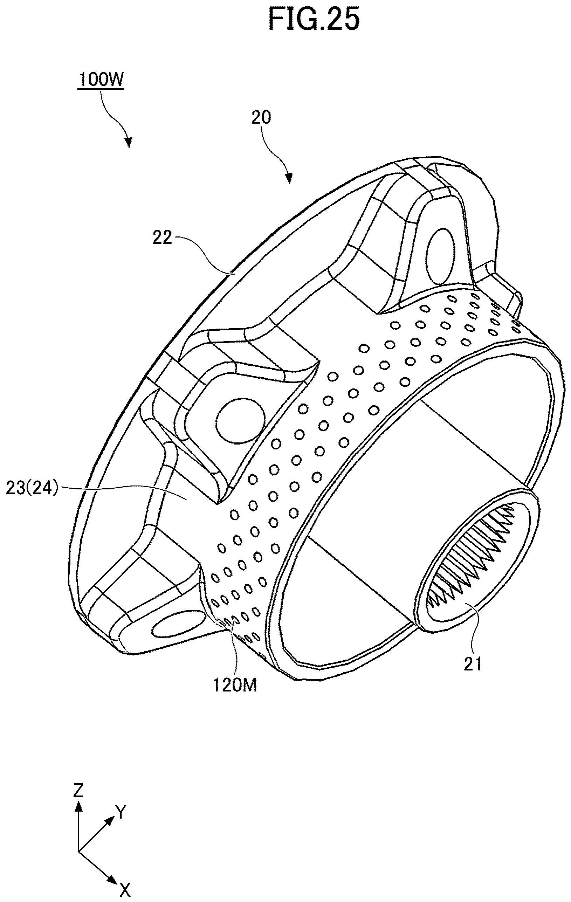

Next, a hub bearing 100W according to the twenty-second embodiment will be described with reference to FIG. 25. FIG. 25 is a perspective view illustrating an outer member of a hub bearing according to the twenty-second embodiment. The hub bearing 100W illustrated in FIG. 25 differs from the hub bearing 100J according to the tenth embodiment illustrated in FIG. 13 in that the shape of a plurality of heat dissipation structures 120M formed on the outer peripheral surface of the outer cylinder 23 is different. In the description of the twenty-second embodiment, the same description as that of the first through twenty-first embodiments is omitted.

The heat dissipation structure 120M has a plurality of recesses (dimples). The recesses are, for example, circular in shape. The plurality of recesses are recessed from the outer peripheral surface of the outer cylinder 23. The plurality of recesses may be arranged at intersections of a plurality of virtual lines oblique in the X-axis direction. The plurality of recesses are arranged at predetermined intervals in the circumferential direction. The plurality of recesses are arranged at predetermined intervals in the X-axis direction. In this manner, the heat dissipation structures 120M may be a plurality of dot-like recesses. The shape of the recesses is not limited to a circle, and may be rectangular, triangular, or other shapes.

### <Hub Bearing according to Twenty-third Embodiment>

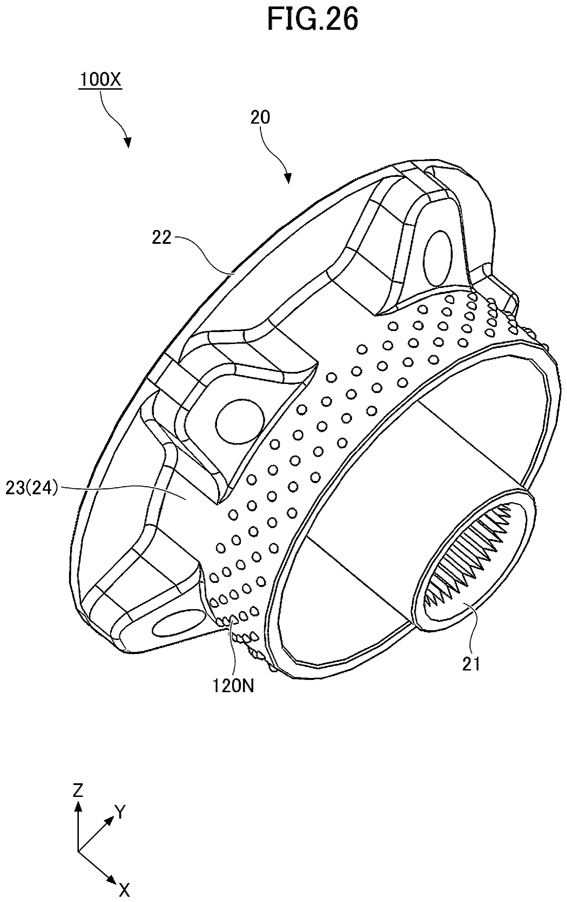

Next, a hub bearing 100X according to the twenty-third embodiment will be described with reference to FIG. 26. FIG. 26 is a perspective view illustrating an outer member of a hub bearing according to the twenty-third embodiment. The hub bearing 100X illustrated in FIG. 26 differs from the hub bearing 100W according to the twenty-second embodiment illustrated in FIG. 25 in that the shape of a plurality of heat dissipation structures 120N formed on the outer peripheral surface of the outer cylinder 23 is different. In the description of the twenty-third embodiment, the same description as that of the first through twenty-third embodiments is omitted.

The heat dissipation structure 120N has a plurality of protrusions. The protrusions are, for example, circular in shape. The plurality of protrusions protrude from the outer peripheral surface of the outer cylinder 23. The plurality of protrusions may be arranged at the intersection of a plurality of virtual lines oblique with respect to the X-axis direction. The plurality of protrusions are arranged at predetermined intervals in the circumferential direction. The plurality of protrusions are arranged at predetermined intervals in the X-axis direction. In this manner, the heat dissipation structures 120M may be a plurality of dot-like protrusions. The shape of the protrusions is not limited to a circle, but may be rectangular, triangular, or other shapes.

Preferred embodiments of the present invention have been described in detail above. However, the present invention is not limited to the foregoing embodiments. The foregoing embodiments can be applied with various modifications, substitutions, and the like without departing from the scope of the present invention. Moreover, the features described separately can be combined as long as there is no technical conflict.

In the foregoing embodiment, both the first seal 40 and the second seal 50 are disposed at positions not overlapping the rolling elements 31 and 32 in the radial direction, but either the first seal 40 or the second seal 50 may be disposed at positions overlapping the rolling elements 31 and 32 in the radial direction. For example, as viewed along the X-axis direction, the first seal 40 may be disposed at positions overlapping the rolling elements 31 and 32 in the radial direction, and the second seal 50 may be disposed at positions not overlapping the rolling elements 31 and 32 in the radial direction. For example, as viewed along the X-axis direction, the second seal 50 may be disposed at positions overlapping the rolling elements 31 and 32 in the radial direction, and the first seal 40 may be disposed at positions not overlapping the rolling elements 31 and 32 in the radial direction.

The hub bearing 100 may have the first seal 40 and the third seal 55, but not the second seal 50. The third seal 55 corresponds to a second seal that seals the gap between the inner ring main body 11 of the inner member 10 and the inner cylinder 21 of the outer member 20. As described in the foregoing embodiments, it suffices that the second seal serves as a component that seals the gap between the inner ring main body 11 and the inner cylinder 21. The second seal may be disposed at both ends of the inner ring main body 11 in the X-axis direction, at one end, or at a position other than the end in the X-axis direction.

The present international application claims priority to Japanese Patent Application No. 2023-035690 filed March 8, 2023, and the entire contents of Japanese Patent Application No. 2023-035690 are incorporated herein by reference.

### REFERENCE SIGNS LIST

100, 100B to 100X Hub bearing
10 Inner member
11, 11B Inner ring main body
12 Inner rolling surface
13 Inner ring disk portion
14 Inner ring outer cylinder
20 Outer member
21 Inner cylinder
22 Disk portion
23 Outer cylinder
24 Outer cylinder main body
25 Outer ring
31, 32 Rolling element
40 First seal (seal)
42a to 42c Lip portion
50 Second seal (seal)
73 Outer ring
80 Flange
110 to 114, 120, 120B, 120E Fins for heat dissipation (heat dissipation structure)
120C, 120D, 120F to 120N Heat dissipation structure

## Claims

1. A hub bearing, comprising:
an inner member including an inner ring main body, the inner ring main body having a cylindrical shape and an outer periphery on which a double row of inner rolling surfaces is formed;
an outer member including
an inner cylinder mounted to a rotating shaft and disposed inside the inner ring main body;
a disk portion projecting radially outward from the inner cylinder and to which a wheel is attached; and
an outer cylinder having a cylindrical shape, connected to the disk portion, and provided with a double row of outer rolling surfaces facing the double row of inner rolling surfaces in a radial direction;
a double train of rolling elements rotatably accommodated between the double row of inner rolling surfaces and the double row of outer rolling surfaces; and
a seal for sealing a gap between the inner member and the outer member, wherein
the inner member includes
an inner ring disk portion extending radially outward from the outer periphery of the inner ring main body; and
an inner ring outer cylinder having a cylindrical shape, connected to the inner ring disk portion, and facing the outer cylinder in the radial direction,
the seal includes a first seal for sealing a gap between the inner ring outer cylinder of the inner member and the outer cylinder of the outer member, and
the first seal is provided at a position where the first seal does not overlap the double train of rolling elements in the radial direction.

2. The hub bearing according to claim 1, wherein
the first seal has a plurality of lip portions contacting the outer cylinder of the outer member at respective positions,
the outer cylinder of the outer member has a contact surface that contacts the plurality of lip portions, and
the contact surface includes a curved surface that is convex with respect to the plurality of lip portions.

3. The hub bearing according to claim 2, wherein
in a cross section along the rotating shaft, a center of curvature of the curved surface lies on a center of rotation of the wheel.

4. The hub bearing according to any one of claims 1 to 3, wherein
the inner ring disk portion and the inner ring outer cylinder are separate from the inner ring main body, and
the inner ring disk portion is attached to the inner ring main body.

5. The hub bearing according to any one of claims 1 to 4, further comprising:
an outer ring attached to the outer cylinder and projecting radially outward from the outer cylinder, wherein
the first seal includes a plurality of lip portions contacting the outer ring at respective positions,
the outer ring includes a contact surface contacting the plurality of lip portions, and
the contact surface includes a curved surface that is convex with respect to the plurality of lip portions.

6. The hub bearing according to claim 5, wherein
the outer ring includes
an attaching piece attached to an inner periphery of the outer cylinder in the radial direction;
a connecting piece projecting radially outward from the attaching piece; and
a contact piece connected to the connecting piece, disposed on the outer periphery of the outer cylinder, and having the contact surface.

7. The hub bearing according to any one of claims 1 to 6, wherein
the outer member includes a flange projecting radially outward from the outer periphery of the outer cylinder, and
the flange is formed so as to cover the first seal in the axial direction of the rotating shaft.

8. A hub bearing, comprising:
an inner member including an inner ring main body, the inner ring main body having a cylindrical shape and an outer periphery on which a double row of inner rolling surfaces is formed;
an outer member including
an inner cylinder mounted to a rotating shaft and disposed inside the inner ring main body;
a disk portion projecting radially outward from the inner cylinder and to which a wheel is attached; and
an outer cylinder having a cylindrical shape, connected to the disk portion, provided with a double row of outer rolling surfaces facing the double row of inner rolling surfaces in the radial direction;
a double train of rolling elements rotatably accommodated between the double row of inner rolling surfaces and the double row of outer rolling surfaces; and
a seal for sealing a gap between the inner member and the outer member, wherein
the seal includes a second seal for sealing a gap between the inner ring main body of the inner member and the inner cylinder of the outer member, and
the second seal is provided at a position where the second seal does not overlap the double train of rolling elements in the radial direction.

9. The hub bearing according to claim 8, wherein
the inner member includes
an inner ring disk portion projecting radially outward from the outer periphery of the inner ring main body; and
an inner ring outer cylinder having a cylindrical shape, connected to the inner ring disk portion, and facing the outer cylinder in the radial direction, wherein
the seal further includes a first seal for sealing a gap between the inner ring outer cylinder of the inner member and the outer cylinder of the outer member, and
the first seal and the second seal are provided at positions where the first and second seals do not overlap the double train of rolling elements in the radial direction.

10. The hub bearing according to any one of claims 1 to 9, wherein
an outer peripheral surface of the outer cylinder is provided with a heat dissipation structure having an uneven shape.
